# EUROPÄISCHE PATENTSCHRIFT

(11) **EP 1 478 707 B1**
(45) Veröffentlichungstag und Bekanntmachung des Hinweises auf die Patenterteilung: **22.02.2006**
(21) Anmeldenummer: 03708143.7
(22) Anmeldetag: 26.02.2003
(51) Int. Cl.: C09D 175/04, C08G 18/38, C08G 18/08, C08G 18/46, C08G 18/12, C08G 18/50, C08G 18/28, C09D 5/16, C09D 5/34, C09K 3/10, C08G 18/10, C08G 65/20, C08G 65/22, C08G 65/18, C08G 18/63, C08G 18/62, C08F 283/00, C08G 18/66

(54) **WAESSRIGES FLUORMODIFIZIERTES POLYURETHANSYSTEM FUR ANTI-GRAFFITI - UND ANTI-SOILING-BESCHICHTUNGEN**
AQUEOUS FLUOROMODIFIED POLYURETHANE SYSTEM FOR ANTI-GRAFFITI AND ANTI-SOILING COATINGS
SYSTEME POLYURETHANNE AQUEUX MODIFIE PAR FLUOR POUR REVETEMENTS ANTI-GRAFFITI ET ANTI-SALISSURES

(30) Priorität: 27.02.2002 DE 10208567
(43) Veröffentlichungstag der Anmeldung: 24.11.2004
(73) Patentinhaber: Degussa Construction Chemicals GmbH, 83308 Trostberg (DE)
(72) Erfinder: STEIDL, Norbert, 83361 Kienberg (DE); MAIER, Alois, 84549 Engelsberg (DE); WOLFERTSTETTER, Franz, 83349 Palling (DE); HILLER, Wolfgang, 72070 Tübingen (DE); STADLER, Rupert, 87719 Mindelheim (DE)
(74) Vertreter: Weiss, Wolfgang
(86) Internationale Anmeldenummer: PCT/EP2003/001971
(87) Internationale Veröffentlichungsnummer: WO 2003/072667

(56) Entgegenhaltungen:
- EP-A- 0 339 862
- EP-A- 1 162 220
- WO-A-02/04538
- US-A- 4 636 545
- US-A- 5 703 194
- PATENT ABSTRACTS OF JAPAN vol. 1997, no. 09, 30. September 1997 (1997-09-30) & JP 09 118843 A (ASAHI GLASS KOOTO &RESIN KK; ASAHI GLASS CO LTD), 6. Mai 1997 (1997-05-06)

## Beschreibung

Gegenstand der vorliegenden Erfindung ist ein wässriges fluormodifiziertes ein- oder zweikomponentiges Polyurethan-System für Antigraffiti- und Antisoiling-Beschichtungen basierend auf einer wässrigen Lösung oder Dispersion von gegebenenfalls hydroxy- und/oder aminofunktionellen Oligo- bzw. Polyurethanen mit fluorierten Seitenketten als Bindemittel-Komponente und gegebenenfalls wasseremulgierbaren Polyisocyanaten als Vernetzer-Komponente sowie dessen Verwendung.

Die meisten polymeren high-performance Beschichtungsmaterialien haben zwar sehr gute mechanische Eigenschaften, besitzen jedoch hohe Oberflächenenergien. Durch eine gezielte chemische Modifikation dieser Systeme mit fluorierten Building-Blocks ist es möglich, die spezifischen Oberflächeneigenschaften fluorierter Materialien mit den individuellen Eigenschaften der Basis-Polymere bzw. -Copolymere zu verbinden. Vorteilhaft erweist sich hierbei, dass oft nur geringe Mengen der teuren Fluorverbindungen benötigt werden, um die gewünschten Oberflächeneigenschaften zu erzielen.

Die zunehmende Nachfrage nach schmutzabweisenden, witterungsbeständigen Beschichtungen führte in letzter Zeit zur Entwicklung neuer Fluorpolymere für Beschichtungssysteme, welche die Nachteile herkömmlicher Fluorpolymere nicht mehr aufweisen. Diese neue Generation von fluorkohlenstoffbasierenden Polymeren für Beschichtungssysteme sind in gängigen organischen Lösemitteln löslich, können auch bei Normaltemperatur ausgehärtet werden und zeigen eine verbesserte Verträglichkeit mit kommerziellen Härtern.

In der Beschichtungstechnologie wurde in den letzten Jahren ökologischen Aspekten, auch im Hinblick auf die Einhaltung bestehender Emissionsrichtlinien, zunehmende Bedeutung beigemessen. Besonders vordringlich ist dabei die Reduzierung der in Beschichtungssystemen verwendeten Mengen an flüchtigen organischen Lösemitteln (VOC, volatile organic compounds).

Die Bindemittel-Klasse der wässrigen bzw. wasserbasierenden Polyurethane als Alternative zu herkömmlichen lösemittelbasierenden Polyurethan-Systemen ist seit über 40 Jahren bekannt. Das Eigenschaftsprofil der wässrigen Polyurethane wurde in den vergangenen Jahrzehnten kontinuierlich verbessert, was durch eine Vielzahl von Patentschriften und Veröffentlichungen zu diesem Themenkreis eindrucksvoll belegt wird. Zur Chemie und Technologie der wasserbasierenden Polyurethane sei auf D. Dieterich, K. Uhlig in *Ullmann's Encyclopedia of Industrial Chemistry, Sixth Edition 2001 Electronic Release.* Wiley-VCH; D. Dieterich in *Houben-Weyl, Methoden der Organischen Chemie.* Bd. E20, H. Bartl, J. Falbe (Hrsg.), Georg Thieme Verlag, Stuttgart 1987, S. 1641ff.; D. Dieterich, Prog. Org. Coat. 9 (1981) 281-330; J. W. Rosthauser, K. Nachtkamp, Journal of Coated Fabrics 16 (1986) 39-79; R. Arnoldus, Surf. Coat. 3 (Waterborne Coat.) (1990), 17998 verwiesen.

Wässrige, colösemittelarme bzw. extrem VOC-reduzierte Zweikomponentige-Polyurethan-Systeme, die aufgrund ihres hohen Eigenschaftsniveaus in Beschichtungssystemen von großer Bedeutung sind, stellen inzwischen in Verbindung mit wasseremulgierbaren Polyisocyanat-Härtersystemen zur chemischen Nachvernetzung eine Alternative zu den entsprechenden lösemittelhaltigen Systemen dar.

Wasserbasierende Copolymer-Dispersionen bzw. -Emulsionen, basierend auf perfluoralkylgruppenhaltigen Monomeren, sind schon seit längerem bekannt. Sie dienen zur Hydro- und Oleophobierung, vor allem von Textilien bzw. Teppichen auch in Verbindung mit weiteren Textilhilfsmitteln, vorausgesetzt die Perfluoralkylgruppen sind linear und enthalten mindestens 6 Kohlenstoff-Atome.

Zur Herstellung dieser Copolymer-Dispersionen bzw. Emulsionen via Emulsionspolymerisation werden unterschiedliche Emulgatorsysteme verwendet und man erhält je nach Art des verwendeten Emulgatorsystems anionisch oder kationisch stabilisierte Copolymer-Dispersionen bzw. Emulsionen mit unterschiedlichen anwendungstechnischen Eigenschaften.

Wässrige Dispersionen von Perfluoralkyl-Gruppen enthaltenden Propfcopolymerisaten und ihre Verwendung als Hydrophobierungs- und Oleophobierungsmittel sind aus der Patentliteratur bereits seit einiger Zeit bekannt.

EP 0 452 774 A1 und DE 34 07 362 A1 beschreiben ein Verfahren zur Herstellung von wässrigen Dispersionen von Copolymerisaten und/oder Pfropfcopolymerisaten aus ethylenisch ungesättigten Perfluoralkylmonomeren und nicht-fluormodifizierten ethylenisch ungesättigten Monomeren, wobei als Pfropfgrundlage wässrige emulgatorfreie Polyurethan-Dispersionen verwendet wurden.

In DE 36 07 773 C2 werden Perfluoralkylliganden enthaltende Polyurethane beschrieben, die in Form einer wässrigen Dispersion, jedoch unter Verwendung externer Emulgatoren, oder in Form einer Lösung in einem organischen Lösemittel(gemisch) ausschließlich zur Ausrüstung von Textilmaterialien und von Leder verwendet werden.

Perfluoralkyl-Gruppen enthaltende Polyurethane zur Oleophob- und Hydrophob-Ausrüstung von Textilien sind auch in den Patenten DE 14 68 295 A1, DE 17 94 356 A1, DE 33 19 368 A1, EP 0 103 752 A1, US 3,398,182 B1, US 3,484,281 B1 und US 3,896,251 B1 beschrieben.

Diese Verbindungen erfordern allerdings für die Anwendung große Mengen und zeigen eine ungenügende Haftung auf dem Substrat.

WO 99/26992 A1 beschreibt wässrige fluor- und/oder silikonmodifizierte Polyurethan-Systeme mit geringen Oberflächenenergien, die zu wasser- und lösemittelstabilen harten Polyurethan-Filmen mit anti-fouling Eigenschaften aushärten. Die Patentansprüche umfassen hier die folgende beiden Perfluoralkylkomponenten:

R_{f}-SO₂N-(Rₕ-OH)₂

(mit R_{f} = Perfluoralkyl-Gruppe mit 1-20 C-Atomen und Rₕ = Alkyl- Gruppe mit 1-20 C-Atomen) und

R_{f}R'_{f}CF-CO₂CH₂CR(CH₂OH)₂

(mit R_{f} = C₄-C₆-Fluoralkyl, R'_{f} = C₁-C₃-Fluoralkyl und R = C₁-C₂-Alkyl)

In Wasser dispergierbare Sulfo-Polyurethan- oder Sulfo-Polyharnstoff-Zusammensetzungen mit niedriger Oberflächenenergie, speziell für tinteaufnehmende Beschichtungen, werden in EP 0 717 057 B1 beschrieben, wobei die hydrophoben Segmente aus Polysiloxan-Segmenten oder einer gesättigten fluoraliphatischen Gruppe mit 6-12 Kohlenstoff-Atomen bestehen, von denen wenigstens 4 vollständig fluoriert sind.

Wässrige Dispersionen von wasserdispergierbaren Polyurethanen mit Perfluoralkyl-Seitenketten ohne die Verwendung externer Emulgatoren sind in EP 0 339 862 A1 beschrieben. Als isocyanat-reaktive Komponente wird hier ein fluoriertes Polyol verwendet, das durch freie radikalische Addition eines Polytetramethylenglykols an ein fluoriertes Olefin (siehe EP 0 260 846 B1) erhalten worden ist. Die erhaltenen Polyurethan-Dispersionen besitzen aber durchweg Festkörpergehalte von unter 30 Gew.-% und benötigen zudem erhebliche Mengen an hydrophiler Komponente. Die Oberflächenenergien der getrockneten Filme betragen immer noch >30 dyne cm⁻¹.

Der vorliegenden Erfindung lag daher die Aufgabe zugrunde, ein System für Antigraffiti- und Antisoiling-Beschichtungen mit verbesserten Material- und ApplikationseigenschaftenunterBerücksichtigungökologischer,ökonomischer und physiologischer Aspekte zu entwickeln.

Diese Aufgabe wurde erfindungsgemäß gelöst durch Bereitstellung eines wässrigen schmutzabweisenden Ein- oder Zweikomponenten-PolyurethanSystems mit fluorierten Seitenketten. Das System enthält eine Bindemittel-Komponente und gegebenenfalls eine Vernetzer-Komponente. Das erfindungsgemäße System ist erhältlich durch
(a) die Herstellung einer Bindemittel-Komponente auf Basis einer wässrigen Lösung oder Dispersion von niedermolekularen hydroxy- und/oder aminofunktionellen Oligo- bzw. Polyurethanen mit fluorierten Seitenketten, wobei man
   2(a₁) 2,5 bis 12 Gewichtsteile einer fluormodifizierten Polyolkomponente (A)(i) mit zwei oder mehr gegenüber Isocyanaten reaktiven Hydroxyl-Gruppen und einer mittleren Molekularmasse von 500 bis 2000 Dalton, wobei als Komponente (A)(i) Umsetzungsprodukte bzw. Makromonomere von monofunktionellen Fluoralkoholen, aliphatischen und/oder aromatischen Diisocyanaten, und Diethanolamin eingesetzt werden, wobei die Fluoralkohole Perfluoralkylalkohole mit terminalen Methylen-Gruppen (Kohlenwasserstoff-Spacern) der allgemeinen Formel

      F(CF₂)ₓ-(CH₂)_{y}-OH,

      mit x = 4-20 und y = 1-6
      oder Hexafluorpropenoxid (HFPO)-Oligomer-Alkohole der allgemeinen Formel

      CF₃CF₂CF₂O-(CF(CF₃)CF₂O)_{z}-CF(CF₃)CH₂-OH,

      mit z = 1-10
      (z.B. Krytox®, Du Pont de Nemours) oder Gemische aus diesen sind, 10 bis
      50 Gewichtsteile einer hochmolekularen Polyol-Komponente (A)(ii) mit zwei oder mehr gegenüber Polyisocyanaten reaktiven Hydroxyl-Gruppen und einer mittleren Molekularmasse von 500 bis 6000 Dalton sowie 0 bis 10 Gewichtsteile einer niedermolekularen Polyol-Komponente (A)(iii) mit zwei oder mehr gegenüber Polyisocyanaten reaktiven Hydroxyl-Gruppen und einer mittleren Molekularmasse von 50 bis 499 Dalton mit 2 bis 30 Gewichtsteilen einer Polyisocyanat-Komponente (B), bestehend aus mindestens einem Polyisocyanat, Polyisocyanat-Derivat oder Polyisocyanat-Homologen mit zwei oder
      mehr aliphatischen oder aromatischen lsocyahat-Gruppen unter Zugabe von 0 bis 25 Gewichtsteilen einer Lösemittel-Komponente (C), bestehend aus einem inerten organischen Lösemittel, gegebenenfalls in Gegenwart eines Katalysators zur Reaktion bringt,
   (a₂) das Polyurethan-Preaddukt aus Stufe (a₁) mit 0,1 bis 10 Gewichtsteilen einer niedermolekularen und anionisch modifizierbaren Polyol- oder Polyamin-Komponente (A)(iv) mit zwei oder mehr gegenüber Polyisocyanaten reaktiven Hydroxyl- und/oder Amino-Gruppen und einer oder mehreren inerten Carbonsäure- und/oder SulfonsäureGruppe(n), welche mit Hilfe von Basen teilweise oder vollständig in Carboxylat- bzw. Sulfonatgruppen überführt werden können oder bereits in Form von Carboxylat und/oder Sulfonat-Gruppen vorliegen, mit einer mittleren Molekularmasse von 100 bis 1000 Dalton und/oder mit 0 bis 20 Gewichtsteilen einer polymeren Polyol-Komponente (A)(v) mit zwei oder mehreren gegenüber Polyisocyanaten reaktiven Hydroxyl-Gruppen und weiteren gegenüber Polyisocyanaten inerten hydrophilen Gruppen mit einer Molekularmasse von 500 bis 5000 Dalton, gegebenenfalls in Gegenwart eines Katalysators umsetzt,
   (a₃) die freien Isocyanat-Gruppen des Polyurethan Prepolymers aus Stufe (a₂) vollständig oder teilweise mit 0 bis 15 Gewichtsteilen einer multifunktionellen Kettenstopper-Komponente (D) mit drei oder mehr gegenüber Isocyanat-Gruppen reaktiven Hydroxyl- und/oder primären und/oder sekundären Amino-Gruppen und einer Molekularmasse von 50 bis 500 Dalton umsetzt, von denen eine mit dem Polyurethan-Preaddukt abreagiert,
   (a₄) das multifunktionelle Polyurethan- Oligomer oder -Polymer aus Stufe (a₃) zur teilweisen oder vollständigen Neutralisation der Säure-Gruppen mit 0,1 bis 10 Gewichtsteilen einer Neutralisations-Komponente (E) versetzt und anschließend
   (a₅) das neutralisierte Polyurethan-Oligomer oder -Polymer aus Stufe (a₄) in 40 bis 120 Gewichtsteilen Wasser, welches noch 0 bis 50 Gewichtsteile einer Formulierungs-Komponente (F) enthalten kann, dispergiert und
   (a₆) das nur teilweise kettengestoppte Polyurethan-Oligomer oder -Polymer aus Stufe (a₅) noch mit 0 bis 10 Gewichtsteilen einer Kettenverlängerungs-Komponente (G) mit zwei oder mehr gegenüber Isocyanat-Gruppen reaktiven primären und/oder sekundären Amino-Gruppen und einer Molekularmasse von 50 bis 500 Dalton umsetzt

   sowie gegebenenfalls
(b) die anschließende Umsetzung der Bindemittel-Komponente aus den Stufen (a₄), (a₅) oder (a₆) mit 20 bis 100 Gewichtsteilen einer Vernetzer-Komponente (H), wobei als Vernetzer-Komponente (H) wasserdispergierbare Polyisocyanate mit aliphatisch und/oder cycloaliphatisch und/oder aromatisch gebundenen Isocyanat-Gruppen eingesetzt werden, welche 0 bis 20 Gewichtsteile eines organischen Lösemittels enthalten können.

Überraschenderweise wurde gefunden, dass die durch die im Oligo- oder Polyurethan-Polymer enthaltenen fluorierten Seitengruppen bewirkte Hydrophobierung der Bindemittel-Komponente nicht zu einer Erhöhung der anionischen Hydrophilierung mit Salzgruppen führt (30-45 meq/100g Festharz) und dass die ausgehärteten Filme bereits mit sehr geringen Fluorgehalten (0,5 bis 5 Gew.-% und vorzugsweise 0,5 bis 2,0 Gew.-% bezogen auf das Festharz) sehr niedrige Oberflächenenergien aufweisen.

In der Zweikomponenten-Anwendung lässt sich auch die Vernetzer-Komponente, insbesondere Polyisocyanate ohne permanente hydrophile Modizierung, sehr leicht durch einfache Emulgiertechniken, beispielsweise durch Verwendung eines mechanischen Rührwerkes oder durch einfaches Mischen der beiden Komponenten per Hand, in die fluormodifizierte Bindemittel-Komponente einarbeiten, wodurch eine feine homogene Verteilung der Polyisocyanat-Tröpfchen in der Bindemittel-Komponente gewährleistet ist.

Das erfindungsgemäße wässrige fluormodifizierte Polyurethan-System für Anti-Graffiti und Anti-Soiling-Beschichtungen ist definiert durch ein mehrstufiges Herstellungsverfahren. In der Reaktionstufe (a) wird zunächst eine lösemittelarme oder -freie Bindemittel-Komponente auf Basis einer wässrigen Lösung oder Dispersion von gegebenenfalls hydroxy- und/oder aminofunktionellen Oligo- oder Polyurethanen mit fluorierten Seitenketten hergestellt, die dann gegebenenfalls in der Reaktionstufe (b) mit einer Vernetzer-Komponente auf Basis wasserdispergierbarer Polyisocyanate weiter zu einem wässrigen hochvernetzten Zweikomponenten-Polyurethan-Beschichtungssystem umgesetzt wird.

Die Herstellung der Bindemittel-Komponente erfolgt mit Hilfe eines modifizierten Prepolymer Mixing Process, dem sogenannten High Solids Process (HSP Technology). Hohe Scherkräfte sind dabei nicht erforderlich, so dass z.B. schnelllaufende Rührer, Dissolver oder Rotor/Stator-Mischer verwendet werden können.

Zur Durchführung dieses Verfahrens werden unter Anwendung der in der Polyurethan-Chemie üblichen Techniken in der Reaktionsstufe (a₁) 2,5 bis 12 Gewichtsteile einer fluormodifizierten Polyolkomponente (A)(i), 10 bis 50 Gewichtsteile einer hochmolekularen Polyol-Komponente (A)(ii) sowie gegebenenfalls 0 bis 10 Gewichtsteile einer niedermolekularen Polyol-Komponente (A) (iii) mit 2 bis 30 Gewichtsteilen einer Polyisocyanat-Komponente (B) unter Zugabe von O bis 25 Gewichtsteilen einer Lösemittel-Komponente (C), gegebenenfalls in Gegenwart eines Katalysators, teilweise oder vollständig zur Reaktion gebracht, wobei die Hydroxyl-Gruppen der Komponenten (A)(i), (A)(ii) und (A)(iii) teilweise oder vollständig mit den Isocyanat-Gruppen der Komponente (B) umgesetzt werden.

Die Herstellung des Polyurethan-Preaddukts gemäss Reaktionsstufe (a₁) erfolgt vorzugsweise in der Weise, dass zunächst die Komponente (B) innerhalb eines Zeitraumes von einigen Minuten der Komponente (A) (i), gegebenenfalls gelöst in der Komponente (C) zugesetzt wird und anschließend innerhalb eines Zeitraumes von einigen Minuten bis zu einigen Stunden ein Gemisch aus den Komponenten, (A)(ii), (A)(iii) und gegebenenfalls (C) zugesetzt bzw. zudosiert wird oder alternativ dazu das Gemisch aus den Komponenten (A)(i), (A)(ii),(A)(iii) und gegebenenfalls (C) innerhalb eines Zeitraumes von einigen Minuten bis zu einigen Stunden der Komponente (B) zugesetzt bzw. zudosiert wird. Zur Verringerung der Viskosität kann in der Reaktionsstufe (a₁) eine Lösemittel-Komponente (C) in geringen Mengen eingesetzt werden.

Die fluormodifizierte Polyolkomponente (A)(i) enthält zwei oder mehr gegenüber Isocyanaten reaktive Hydroxyl-Gruppen und weist eine mittlere Molekularmasse vom 500-2000 Dalton (Zahlenmittel) auf. Sie besteht aus dem Umsetzungsprodukt bzw. Makromonomer von monofunktionellen Fluoralkoholen, aliphatischen und/oder aromatischen Diisocyanaten, und Diethanolamin. Als Fluoralkohole können Perfluoralkylalkohole mit terminalen Methylen-Gruppen (Kohlenwasserstoff-Spacern) der allgemeinen Formel

F(CF₂)ₓ-(CH₂)_{y}-OH,

mit x = 4-20 und y = 1-6
mit Hexafluorpropenoxid (HFPO)-Oligomer-Alkohol der allgemeinen Formel

CF₃CF₂CF₂O-(CF(CF₃)CF₂O)₂-CF(CF₃)CH₂-OH,

mit z = 1-10
(z.B. Krytox®, Du Pont de Nemours) oder aber Gemische aus beiden eingesetzt werden.

Der Fluoralkohol wird zunächst bei einer Temperatur zwischen 0 und 30 °C unter Zusatz eines Katalysators sowie eines geeigneten Lösemittels zum entsprechenden Diisocyanat innerhalb eines Zeitraumes von 30-60 Minuten zugetropft und in der Weise zur Reaktion gebracht, dass nur eine Isocyanat-Gruppe umgesetzt wird. In einem weiteren Schritt wird das entstandene Preaddukt innerhalb von einigen Minuten unter Kühlung in Diethanolamin eingetropft.

Geeignete Lösemittel sind z.B. N-Methylpyrrolidon (NMP) oder Tetrahydrofuran.

Gebräuchliche Katalysatoren für Polyadditions-Reaktionen an Polyisocyanate sind beispielsweise Dibutylzinnoxid, Dibutylzinndilaurat (DBTL), Triethylamin, Zinn(II)-octoat, 1,4-Diaza-bicyclo[2,2,2]octan (DABCO), 1,4-Diaza-bicyclo[3,2,0]-5-nonen (DBN), 1,5-Diaza-bicyclo [5,4,0]-7-undecen (DBU).

Die Polyol-Komponente (A)(ii) besteht aus einem hocholekularen Polyol mit zwei oder mehr gegenüber Polyisocyanaten reaktiven Hydroxyl- Gruppen mit einer mittleren Molekularmasse (Zahlenmittel) von 500 bis 6000 Dalton. Als geeignete polymere Polyole können Polyalkylenglykole, aliphatische oder aromatische Polyester, Polycaprolactone, Polycarbonate, α,ω-Polymethacrylatdiole, α,ω-Dihydroxyalkylpoly- dimethylsiloxane, hydroxyfunktionelle Makromonomere, hydroxyfunktionelle Telechele, hydroxyfunktionelle Epoxid-Harze oder geeignete Gemische daraus eingesetzt werden.

Geeignete Polyalkylenglykole sind beispielsweise Polypropylenglykole, Polytetramethylenglykole bzw. Polytetrahydrofurane, hydrophob modifizierte Polyetherpolymere bestehend aus verseifungsstabilen Blockcopolymeren mit ABA-, BAB- oder (AB)ₙ-Struktur, wobei A ein Polymer-Segment mit hydrophobierenden Eigenschaften und B ein Polymer-Segment auf Basis Polypropylenoxid repräsentiert, hydrophob modifizierte Polyetherpolyole bestehend aus verseifungsstabilen Blockcopolymeren mit A₁A₂A₃- oder (A₁A₂)ₙ-Struktur, wobei A jeweils Polymer-Segmente mit hydrophobierenden Eigenschaften repräsentiert, hydrophob modifizierte statistische Polyetherpolyole bestehend aus verseifungsstabilen statistischen Copolymeren aus mindestens einem hydrophoben Alkylenoxid und Propylenoxid.

Bevorzugt werden lineare bzw. difunktionelle hydrophob modifizierte Polyetherpolymere bestehend aus verseifungsstabilen Blockcopolymeren mit ABA-, BAB- oder (AB)ₙ-Struktur, wobei A ein Polymer-Segment mit hydrophobierenden Eigenschaften und B ein Polymer-Segment auf Basis Polypropylenoxid darstellt, mit einer mittleren Molekularmasse (Zahlenmittel) von 1000 bis 3000 Dalton eingesetzt.

Geeignete aliphatische oder aromatische Polyester sind beispielsweise Kondensate auf Basis von 1,2-Ethandiol bzw. Ethylenglykol und/oder 1,4-Butandiol bzw. 1,4-Butylenglykol und/oder 1,6-Hexandiol bzw. 1,6-Hexamethylenglykol und/oder 2,2-Dimethyl-1,3-propandiol bzw. Neopentylglykol und/oder 2-Ethyl-2-hydroxymethyl-1,3-propandiol bzw. Trimethylolpropan sowie 1,6-Hexandisäure bzw. Adipinsäure und/oder 1,2-Benzoldicarbonsäure bzw. Phthalsäure und/oder 1,3-Benzoldicarbonsäure bzw. Isophthalsäure und/oder 1,4-Benzoldicarbonsäure bzw. Terephthalsäure und/oder 5-Sulfoisophthalsäure-Natrium bzw. deren Ester sowie Umsetzungsprodukte aus Epoxiden und Fettsäuren. Bevorzugt werden lineare bzw. difunktionelle aliphatische oder aromatische Polyester-Polyole mit einer mittleren Molekularmasse (Zahlenmittel) von 1000 bis 3000 Dalton eingesetzt.

Polycaprolactone auf Basis von (ε-Caprolacton (CAPA-Typen, Fa. Solvay Interox Ltd.), Polycarbonate auf Basis von Dialkylcarbonaten und Glykolen (Desmophen 2020, Fa. Bayer AG) und Kombinationen (Desmophen C 200, Fa. Bayer AG) daraus gehören ebenfalls zur Gruppe der Polyester. Bevorzugt werden lineare bzw. difunktionelle Typen mit einer mittleren Molekularmasse (Zahlenmittel) von 1000 bis 3000 Dalton eingesetzt.

Als α,ω-Polymethacrylatdiole (TEGO® Diol BD 1000, TEGO® Diol MD 1000 N, TEGO® Diol MD 1000 X, Fa. Tego Chemie Service GmbH) mit einer Molekularmasse von 1000 bis 3000 Dalton und α,ω-Dihydroxyalkylpolydimethylsiloxane werden bevorzugt lineare bzw. difunktionelle Typen mit einer mittleren Molekularmasse (Zahlenmittel) von 500 bis 3000 Dalton eingesetzt.

Die Komponente (A)(iii) besteht aus einem niedermolekularen Polyol mit zwei oder mehreren gegenüber Polyisocyanaten reaktiven Hydroxyl-Gruppen mit einer mittleren Molekularmasse (Zahlenmittel) von 50 bis 499 Dalton. Als geeignete niedermolekulare Polyole können beispielsweise 1,2-Ethandiol bzw. Ethylenglykol, 1,2-Propandiol bzw. 1,2-Propylenglykol, 1,3-Propandiol bzw. 1,3-Propylenglykol, 1,4-Butandiol bzw. 1,4-Butylenglykol, 1,6-Hexandiol bzw. 1,6-Hexamethylenglykol, 2-Methyl-1,3-propandiol, 2,2-Dimethyl- 1,3-propandiol bzw. Neopentylglykol, 1,4-Bis-(hydroxymethyl)- cyclohexan bzw. Cyclohexandimethanol, 1,2,3-Propantriol bzw. Glycerol, 2-Hydroxymethyl-2-methyl-1,3-propanol bzw. Trimethylolethan, 2-Ethyl-2-hydroxymethyl-1,3-propandiol bzw.

Trimethylolpropan, 2,2-Bis-(hydroxymethyl)-1,3-propandiol bzw. Pentaerythrit oder Gemische davon eingesetzt werden. Bevorzugt wird 1,4-Butandiol eingesetzt.

Die Polyisocyanat-Komponente (B) besteht aus mindestens einem Polyisocyanat, Polyisocyanat-Derivat oder Polyisocyanat-Homologen mit zwei oder mehreren aliphatischen oder aromatischen Isocyanat-Gruppen. Geeignet sind insbesondere die in der Polyurethan-Chemie hinreichend bekannten Polyisocyanate oder Kombinationen daraus. Als geeignete aliphatische Polyisocyanate können beispielsweise 1,6-Diisocyanato- hexan (HDI), 1-Isocyanato-5-isocyanatomethyl-3,3,5-trimethyl-cyclo-hexan bzw. Isophorondüsocyanat (IPDI), Bis-(4-isocyanatocyclo-hexyl)- methan (H₁₂MDI), 1,3-Bis-(1-isocyanato-1-methyl-ethyl)-benzol (m- TMXDI) bzw. technische Isomeren-Gemische der einzelnen aromatischen Polyisocyanate eingesetzt werden. Als geeignete aromatische Polyisocyanate können beispielsweise 2,4-Diisocyanattoluol bzw. Toluoldiisocyanat (TDI), Bis-(4-isocyanatophenyl)-methan (MDI) und gegebenenfalls dessen höhere Homologe (Polymeric MDI) bzw. technische Isomeren-Gemische der einzelnen aromatischen Polyisocyanate eingesetzt werden. Weiterhin sind auch die sogenannten. "Lackpolyisocyanate" auf Basis von Bis-(4-isocyanatocyclo-hexyl)-methan (H₁₂MDI), 1,6-Diisocyanatohexan (HDI),1-Isocyanato-5-isocyanato-methyl-3,3,5-trimethyl-cycfohexan(IPDI) grundsätzlich geeignet. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Die aliphatischen Polyisocyanate sind gegenüber den aromatischen Polyisocyanaten zu bevorzugen. Weiterhin werden Polyisocyanate mit Isocyanat-Gruppen unterschiedlicher Reaktivität bevorzugt.

Das NCO/OH-Equivalentverhältnis der Komponenten (A) und (B) wird auf einen Wert von 1,2 bis 2,5, vorzugsweise 1,5 bis 2,25 eingestellt.

Vorzugsweise werden Polyisocyanate. mit Isocyanat-Gruppen unterschiedlicher Reaktivität eingesetzt, um engere Molekularmassen-Verteilungen mit geringerer Uneinheitlichkeit zu erhalten. Dementsprechend werden Polyurethan-Prepolymere mit linearer Struktur bevorzugt, die sich aus difunktionellen Polyol- und Polyisocyanat-Komponenten zusammensetzen. Die Viskosität der Polyurethan-Prepolymere ist relativ niedrig und weitgehend unabhängig von der Struktur der verwendeten Polyol- und Polyisocyanat- Komponenten.

Die Lösemittel-Komponente (C) besteht aus einem inerten organischen Lösemittel. Als geeignete organische Lösemittel können beispielsweise niedrigsiedende Lösemittel, wie Aceton und Methylethylketon, oder hochsiedende Lösemittel, wie N-Methylpyrrolidon und Dipropylenglykoldimethylether (Proglyde DMM®), eingesetzt werden. Nach der Herstellung können die niedrigsiedenden organischen Lösemittel gegebenenfalls durch Redestillation wieder entfernt werden. Gemäß einer besonders bevorzugten Ausführungsform enthält die Polyurethan-Dispersion weniger als 10 Gew.-% an organischen Lösemitteln.

In der nachfolgenden Reaktionssstufe (a₂) wird das teilweise oder vollständig abreagierte Polyurethan-Preaddukt aus Stufe (a₁) mit 1 bis 10 Gewichtsteilen einer niedermolekularen und anionisch modifizierbaren Polyol-Komponente (A)(iv) und/oder mit 0 bis 20 Gewichtsteilen einer polymeren Diolkomponente (A)(v), gegebenenfalls in Gegenwart eines Katalysators, zum entsprechenden Polyurethan-Prepolymer zur Reaktion gebracht.

Die Herstellung des Polyurethan-Prepolymers gemäss Reaktionsstufe (a₂) erfolgt vorzugsweise in der Weise, dass die feingemahlene Polyol-Komponente (A)(iv) mit einer mittleren Teilchengröße <150 *µ*m und die polymere Diolkomponente (A)(v) innerhalb eines Zeitraumes von einigen Minuten bis zu einigen Stunden dem Polyurethan-Preaddukt aus Stufe a₁) zugesetzt bzw. zudosiert werden. Das in Reaktionstufe (a₂) eingesetzte Polyurethan-Preaddukt aus Stufe (a₁) kann bei entsprechender Prozessführung bzw. unvollständiger Umsetzung neben Isocyanat- Gruppen und/oder Polyisocyanat-Monomeren gegebenenfalls auch noch freie Hydroxyl-Gruppen aufweisen.

Die Komponente (A)(iv) besteht aus mindestens einem niedermolekularen und anionisch modifizierbaren Polyol oder Polyamin mit einer oder mehreren gegenüber Polyisocyanaten reaktiven Hydroxyl- und/oder Amino-Gruppen und einer oder mehreren gegenüber Polyisocyanaten inerten Carbonsäure und/oder Sulfonsäure-Gruppe(n); die in Gegenwart von Basen ganz oder teilweise in Carboxylat- und/oder Sulfonat-Gruppen überführt werden können oder bereits in Form von Carboxylat- und/oder Sulfonat-Gruppen vorliegen und einer mittleren Molekularmase von 100 bis 1000 Dalton (Zahlenmittel). Als niedermolekulare und anionisch modifizierbare Polyole können beispielsweise Hydroxypivalinsäure (Handelsname HPA, Fa. Perstorp Specialty Chemicals AB), 2-Hydroxymethyl-3-hydroxypropansäure bzw. Dimethylolessigsäure, 2-Hydroxymethyl-2-methyl-3- hydroxypropansäure bzw. Dimethylol-propionsäure (Handelsname Bis-MPA, Fa. Perstorp Specialty Chemicals AB), 2-Hydroxymethyl-2-ethyl-3-hydroxypropansäure bzw. Dimethylol-buttersäure, 2-Hydroxymethyl-2-propyl-3-hydroxypropansäure bzw. Dimethylolvaleriansäure, Citronensäure, Weinsäure, [Tris-(hydroxymethyl)-methyl]-3-aminopropansulfonsäure (TAPS, Fa. Raschig GmbH), Verbindungen auf Basis von 1,3-Propansulfon (Fa. Raschig GmbH) und/oder 3-Mercaptopropansulfonsäure, Natrium-Salz (Handelsname MPS, Fa. Raschig GmbH) oder Gemische davon eingesetzt werden. Diese Verbindungen können gegebenenfalls auch Amino-Gruppen anstelle von Hydroxyl-Gruppen aufweisen. Bevorzugt werden Bishydroxyalkancarbonsäuren und/oder Bishydroxysulfonsäuren bzw. deren Alkalisalze mit einer Molekularmasse von 100 bis 499 Dalton eingesetzt und insbesondere 2-Hydroxymethyl-2-methyl-3-hydroxypropansäurebzw.Dimethylolpropionsäure (Handelsname DMPA® der Fa. Trimet Technical Products, Inc.).

Die Komponente (A)(v) besteht aus 0 bis 20 Gewichtsteilen einer polymeren Polyol-Komponente mit zwei oder mehr gegenüber Polyisocyanaten reaktiven Hydroxyl-Gruppen und weiteren gegenüber Polyisocyanaten inerten hydrophilen Gruppen, wie z.B. Polyethylenoxid-Segmente, mit einer mittleren Molekularmasse von 500 bis 5000 Dalton (Zahlenmittel). Bevorzugt werden Umsetzungsprodukte aus Poly-(ethylenoxid[*-co*/*b*/*ock*/*ran*-propylenoxid])-monoalkylethern, einem Diisocyanat und Diethanolamin eingesetzt.

Die Durchführung der Reaktionsstufen (a₁) und (a₂) ist im Hinblick auf die Reaktionsbedingungen relativ unkritisch. Der Reaktionsansatz wird in den Reaktionsstufen (a₁) und (a₂) unter Ausnutzung der Exothermie der Polyadditions-Reaktion bis zum Erreichen des berechneten bzw. theoretischen NCO-Gehaltes vorzugsweise bei 60 bis 120 °C, insbesondere bei 80 bis 100 °C, unter Inertgas-Atmosphäre gerührt. Die erforderlichen Reaktionszeiten liegen im Bereich von einigen Stunden und werden durch Reaktions-Parameter, wie die Reaktivität der Komponenten, die Stöchiometrie der Komponenten und die Temperatur, maßgebend beeinflusst.

Die Umsetzung der Komponenten (A) und (B) in den Reaktionsstufen (a₁) und/oder (a₂) kann in Gegenwart eines für Polyadditions-Reaktionen an Polyisocyanaten üblichen Katalysators erfolgen. Bei Bedarf erfolgt ein Zusatz dieser Katalysatoren in Mengen von 0,01 bis 1 Gew.-% bezogen auf die Komponenten (A) und (B). Gebräuchliche Katalysatoren für Polyadditions-Reaktionen an Polyisocyanate sind beispielsweise Dibutylzinnoxid, Dibutylzinndilaurat (DBTL), Triethylamin, Zinn(ll)-octoat, 1,4-Diaza-bicyclo[2,2,2]octan (DABCO), 1,4-Diaza-bicyclo[3,2,0]-5-nonen (DBN), 1,5-Diaza-bicyclo[5,4,0]-7-undecen (DBU).

Das anionisch modifizierbare Polyurethan-Prepolymer aus Reaktionsstufe (a₂) wird in der nachfolgenden Reaktionsstufe (a₃) vollständig oder teilweise mit 0 bis 15 Gewichtsteilen einer multifunktionellen Kettenstopper-Komponente (D) zur Reaktion gebracht, unter Bedingungen, bei denen jeweils nur eine reaktive Gruppe oder Komponente (D) mit einer Isocyanat-Gruppe des Polyurethan-Preaddukts abreagiert. Die Reaktions-Stufe (a₃) wird vorzugsweise bei einer Temperatur von 60 bis 120 °C, insbesondere bei 80 bis 100 °C durchgeführt.

Die Kettenstopper-Komponente (D) besteht vorzugsweise aus einem oder mehreren Polyolen, Polyaminen und/oder Polyaminoalkoholen mit drei oder mehr gegenüber Isocyanat-Gruppen reaktiven Hydroxyl- und/oder primären und/oder sekundären Amino-Gruppen und einer mittleren Molekularmasse von 50 bis 500 Dalton (Zahlenmittel), von denen eine mit dem Polyurethan-Preaddukt abreagiert. Als geeignete Kettenstopper-Komponente (D) können beispielsweise Diethanolamin, Trimethylol-propan, Ditrimethylolpropan, Pentaerythrit, Dipentaerythryt, Kohlenhydrate und/oder deren Derivate eingesetzt werden. Bevorzugt werden aliphatische oder cycloaliphatische Polyole und/oder Polyamine und/oder Aminoalkohole eingesetzt und insbesondere Diethanolamin, und/oder Trimethylolpropan.

Die Kettenstopper-Komponente (D) wird in einer solchen Menge zugegeben, dass der Kettenstoppungsgrad, bezogen auf die freien Isocyanat-Gruppen des Polyurethan-Prepolymers, aus den Komponenten (A) und (B) bei 0 bis 100 Equivalent-%, liegt.

Das funktionalisierte und anionisch modifizierbare Polyurethan-Oligomer oder -Polymer aus Reaktionsstufe (a₃), das zwei oder mehrere reaktive Gruppen pro Kettenende und eine Gesamtfunktionalität von ≥4 aufweist, wird in der nachfolgenden Reaktionsstufe (a₄) mit 0,1 bis 10 Gewichtsteilen einer Neutralisations-Komponente (E) zur teilweisen oder vollständigen Neutralisation der Carbonsäure- und/oder Sulfonsäure-Gruppen zur Reaktion gebracht (direkte Neutralisation). Die Reaktions-Stufe (a₄) wird vorzugsweise bei einer Temperatur von 40 bis 65 °C, insbesondere bei ca. 50 °C, durchgeführt.

Die Neutralisations-Komponente (E) besteht aus einer oder mehreren Basen, die zur teilweisen oder vollständigen Neutralisation der Carbonsäure- und/oder Sulfonsäure-Gruppen dienen. Sofern die Komponente (A)(iv) bereits in Form ihrer Salze vorliegt, kann auf die Neutralisations-Komponente (E) verzichtet werden. Als geeignete Basen können beispielsweise tertiäre Amine wie N,N-Dimethylethanolamin, N-Methyldiethanolamin, Triethanolamin, N,N-Dimethylisopropanolamin, N-Methyldiisopropanolamin, Triisopropylamin, N-Methylmorpholin, N-Ethylmorpholin, Triethylamin, Ammoniak oder Alkalihydroxide wie Lithiumhydroxid, Natriumhydroxid, Kaliumhydroxid eingesetzt werden. Bevorzugt werden tertiäre Amine und insbesondere Triethylamin eingesetzt.

Die Neutralisations-Komponente (E) wird in einer solchen Menge zugegeben, dass der Neutralisations-Grad bezogen auf die freien Carbonsäure- und/oder Sulfonsäure-Gruppen des Polyurethan-Oligomers oder -Polymers aus den Komponenten (A), (B) und (D) bei 60 bis 100 Equivalent-%, vorzugsweise bei 80 bis 95 Equivalent-%, liegt. Bei der Neutralisation werden aus den Carbonsäure- und/oder Sulfonsäure-Gruppen Carboxylat- und/oder Sulfonat-Gruppen gebildet, die zur anionischen Modifizierung bzw. Stabilisierung der Polyurethan-Dispersion dienen.

Das funktionalisierte und anionisch modifizierte Polyurethan-Oligomer oder-Polymer aus Reaktionsstufe (a₄) wird in der nachfolgenden Reaktionsstufe (a₅) in 40 bis 120 Gew.-Teilen Wasser, welches noch 0 bis 50 Gew.-Teile einer Formulierungs-Komponente (F) enthalten kann (*in-situ* Formulierung), dispergiert. Die Reaktions-Stufe (a₅) wird vorzugsweise bei einer Temperatur von 30 bis 50 °C, insbesondere bei ca. 40 °C, durchgeführt. Bei Bedarf kann das Wasser, welches noch die Formulierungs-Komponente (F) enthalten kann, auch in das multifunktionelle und anionisch modifizierte Polyurethan-Oligomer oder -Polymer dispergiert werden.

Die Reaktionsstufen (a₄) und (a₅) können auch so zusammengefasst werden, dass die Komponente (E) dem Wasser vor dem Dispergieren zugesetzt wird (indirekte Neutralisation). Bei Bedarf kann auch eine Kombination aus direkter und indirekter Neutralisation angewendet werden.

Bei der Dispergierung wird das Polyurethan-Prepolymer in das Dispergier-Medium überführt und bildet dabei eine wässrige Lösung oder Dispersion von gegebenenfalls hydroxy- und/oder aminofunktionellen Oligo- oder Polyurethanen aus. Das anionisch modifizierte Polyurethan- Oligomer oder -Polymer bildet dabei entweder Micellen, die an der Oberfläche stabilisierende Carboxylat- und/oder Sulfonat-Gruppen und im Inneren reaktive Isocyanat-Gruppen aufweisen, oder liegt gelöst in der wässrigen Phase vor. Alle kationischen Gegen-lonen zu den anionischen Carboxylat- und/oder Sulfonat-Gruppen sind im Dispergier-Medium gelöst. Die Begriffe "Dispergierung" bzw. "Dispersion" beinhalten, dass neben dispergierten Komponenten mit micellarer Struktur auch solvatisierte und/oder suspendierte Komponenten enthalten sein können.

Der Härtegrad des verwendeten Wassers ist für das Verfahren unerheblich, die Verwendung von destilliertem oder entsalztem Wasser ist daher nicht erforderlich. Hohe Härtegrade bewirken eine weitere Verringerung der Wasseraufnahme der wässrigen hochvernetzten Zweikomponenten-Polyurethan-Beschichtungssytems, ohne deren Material-Eigenschaften negativ zu beinflussen.

Die Formulierungs-Komponente (F) besteht aus Entschäumern, Entlüftern, Gleit- und Verlaufadditiven, strahlenhärtende Additiven, Dispergieradditiven, Substratnetzadditiven, Hydrophobierungsmitteln, Rheologieadditiven, wie Polyurethan-Verdicker, Koaleszenzhilfsmitteln, Mattierungsmitteln, Haftvermittlern, Frostschutzmitteln, Antioxidantien, UV-Stabilisatoren, Bakteriziden, Fungiziden, weiteren Polymeren und/oder Polymer-Dispersionen sowie Füllstoffen, Pigmenten, Mattierungsmittein oder geeignete Kombination daraus. Die einzelnen Formulierungs-Bestandteile sind dabei als inert zu betrachten.

Das gegebenenfalls nur teilweise kettengestoppte funktionalisierte und anionisch modifizierte Polyurethan-Oligomer oder -Polymer aus Reaktonsstufe (a₅) wird in der anschließenden Reaktionsstufe (a₆) mit 0 bis 10 Gewichtsteilen einer Kettenverlängerungs-Komponente (G) zur Reaktion gebracht. Die Reaktionsstufe (a₆) wird vorzugsweise bei einer Temperatur von 30 bis 50 °C, insbesondere bei ca. 40 °C, durchgeführt.

Die Reaktionsstufen (a₅) und (a₆) können auch so zusammengefasst werden, dass die Komponente (G) dem Wasser vor dem Dispergieren zugesetzt wird.

Die Kettenverlängerungs-Komponente (G) besteht aus einem Polyamin mit zwei oder mehr gegenüber Polyisocyanaten reaktiven Amino- Gruppen und einer mittleren Molekularmasse von 50 bis 500 Dalton (Zahlenmittel). Als geeignete Polyamine können beispielsweise Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin, Isophorondiamin, N-(2-Aminoethyl)-2-aminoethanol, Addukte aus Salzen der 2-Acrylamido- 2-methylpropan-1-sulfonsäure (AMPS®) und Ethylendiamin, Addukte aus Salzen der (Meth)acrylsäure und Ethylendiamin, Addukte aus 1,3- Propansulfon und Ethylendiamin oder beliebige Kombinationen dieser Polyamine verwendet werden. Bevorzugt werden difunktionelle primäre Amine und insbesondere Ethylendiamin eingesetzt.

Die Kettenverlängerungs-Komponente (G) wird in einer solchen Menge zugegeben, dass der Kettenverlängerungsgrad bezogen auf die freien Isocyanat-Gruppen des Polyurethan-Oligomers oder -Polymers aus den Komponenten (A), (B), (D) und (E) bei 0 bis 95 Equivalent-% liegt. Die Kettenverlängerungs-Komponente (G) kann in vorab entnommenen Anteilen des Wassers im Gewichtsverhältnis 1:1 bis 1:10 verdünnt werden, um die zusätzliche Exothermie durch die Hydratisierung der Amine zurückzudrängen.

Die (partielle) Kettenverlängerung führt zur Erhöhung der Molekularmasse des Polyurethan-Oligomers bzw. -Polymers. Die Kettenverlängerungs-Komponente (E) reagiert dabei mit reaktiven Isocyanat-Gruppen wesentlich rascher als Wasser. Im Anschluss an die Reaktions-Stufe (a₆) werden eventuell noch vorhandene freie Isocyanat-Gruppen mit Wasser vollständig kettenverlängert.

Der Festkörper-Gehalt an Polyurethan-Oligomer oder -Polymer bestehend aus den Komponenten (A), (B), (D), (E) und (G) wird- auf 35 bis 60 Gew.-%, vorzugsweise 40 bis 50 Gew.-%, bezogen auf die Gesamtmenge der wässrigen Bindemittel-Komponente bestehend aus den Komponenten (A) bis (E) und (G), eingestellt.

Die mittlere Partikelgröße der Micellen der wässrigen Bindemittel-Komponente bestehend aus den Komponenten (A) bis (E) und (G) beträgt vorzugsweise 10 bis 300 nm.

Die mittlere Molekularmasse des Polyurethan-Oligomers oder -Polymers bestehend aus den Komponenten (A), (B), (D), (E) und (G) beträgt vorzugsweise 2000 bis 20 000 Dalton (Zahlenmittel).

Der Gehalt an Carboxylat- und/oder Sulfonat-Gruppen des Polyurethan-Oligomers oder -Polymers bestehend aus den Komponenten (A), (B), (D), (E) und (G) wird vorzugsweise auf 10 bis 45 meq·(100 g)⁻¹, besonders bevorzugt auf 15 bis 30 meq·(100 g)⁻¹ eingestellt.

Die Bindemittel-Komponente liegt in Form einer Dispersion oder molekulardispersen Lösung von gegebenenfalls hydroxy- und/oder aminofunktionellen Oligo- bzw. Polyurethanen vor, die mit Wasser verdünnbar sind und in einem pH-Bereich von 6 bis 9 liegen. Sie können gegebenenfalls noch weitere wasserverdünnbare organische Polyhydroxyverbindungen, wie wasserlösliche Alkohole mit mehr als zwei Hydroxylgruppen, wie z. B. Glycerin, Trimethylolpropan, 1,2,3-Butantriol, 1,2,6-Hexantriol, Pentaerythrit oder Zucker, enthalten, wodurch die lacktechnischen Eigenschaften der ausgehärteten Beschichtung entsprechend modifiziert werden können.

Die Stabilisierung dieser Dispersionen oder Lösungen erfolgt durch die Anwesenheit von ionisch hydrophilen Gruppen, wie z.B. Carboxylat-, Sulfonat- oder anderen hydrophilen Gruppen, die durch vollständige oder teilweise Neutralisation der entsprechenden Säure-Gruppen erhalten werden.

Die Bindemittel-Komponente aus Reaktionsstufe (a₅) oder (a₆) wird gegebenenfalls schließlich in der Reaktionsstufe (b) mit der gegebenenfalls hydrophil modifizierten Vernetzer-Komponente (H) vorzugsweise im Verhältnis 3:1 bis 5:1 (bezogen auf das jeweilige Gewicht) zur Reaktion gebracht, wobei die Vernetzer-Komponente (H) zur Bindemittel-Komponente gegeben wird und man nach der Applikation ein hochvernetztes Anti-Graffiti- und Anti-Soiling Polyurethan-Beschichtungssystem erhält. Die Reaktionsstufe (b) wird vorzugsweise bei einer Temperatur von 20 bis 40 °C, insbesondere bei ca. 20 °C, durchgeführt.

Die Vernetzer-Komponente (H) besteht aus wasserdispergierbaren Polyisocyanaten mit aliphatisch und/oder cycloaliphatisch und/oder aromatisch gebundenen lsocyanat-Gruppen, welche 0 bis 20 Gewichtsteile eines organischen Lösemittels enthalten. Die aliphatischen Polyisocyanate sind gegenüber den aromatischen Polyisocyanaten zu bevorzugen. Geeignet sind insbesondere die in Polyurethan-Chemie hinreichend bekannten "Lackpolyisocyanate" auf Basis von Bis-(4-isocyanatocyclo-hexyl)-methan (H₁₂MDI), 1,6-Diisocyanatohexan (HDI), 1-Isocyanato-5-isocyanatomethyl-3,3,5-trimethyl-cyclohexan (IPDI) oder Kombinationen daraus. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanaten dem Stand der Technik entsprechend auf ein Minimum reduziert wurde. Daneben können auch noch hydrophil modifizierte Polyisocyanate eingesetzt werden, die beispielsweise durch Umsetzung von "Lackpolyisocyanaten" mit Polyethylenglykol zugänglich sind. Als geeignete Polyisocyanate können beispielsweise handelsübliche HDI-Isocyanurate ohne (Handelsname Rhodocoat WT 2102, Fa. Rhodia AG) oder mit hydrophiler Modifizierung (Handelsname Basonat P LR 8878, Fa. BASF AG, Handelsname Desmodur DA bzw. Bayhydur 3100 der Fa. Bayer AG) eingesetzt werden.

Zur Herstellung des gebrauchsfertigen wässrigen fluormodifizierten Zweikomponenten-Polyurethan-Beschichtungsmittels wird die Vernetzer-Komponente (H) ("Härter", Teil B) kurz vor der Verarbeitung in die Bindemittel-Komponente aus den Komponenten (A) bis (G) ("Stammlack", Teil A) eingemischt. Um ein problemloses Emulgieren zu erreichen, empfiehlt es sich, die Polyisocyanate mit geringen Mengen organischer Lösemittel, wie z.B. Dipropylenglykoldimethylether (Proglyde DMM®), Butyl(di)glykolacetat oder Butylacetat, zu verdünnen. Meistens sind einfache Emulgiertechniken, beispielsweise mit einem mechanischen Rührwerk (Bohrmaschine mit Rührer), ausreichend, um eine homogene Verteilung der Komponenten zu erreichen. Die Mengen der Bindemittel-Komponente und der Vernetzer-Komponente werden dabei so bemessen, dass das NCO/(OH + NH₍₂₎)-Equivalentverhältnis der Isocyanat-Gruppen der Vernetzer-Komponente und der Hydroxyl- und/oder Amino-Gruppen der Bindemittel-Komponente auf 1,1 bis 1,6 vorzugsweise 1,2 bis 1,4, eingestellt wird.

Es lassen sich auf diese Weise transparente kratzfeste Beschichtungen mit sehr geringen Oberflächenenergien und, bedingt durch eine hohe Vernetzungsdichte, mit hervorragenden Eigenschaften erzielen. Dies gilt sowohl im Hinblick auf die Verarbeitbarkeit als auch in Bezug auf die Oberflächen- und mechanischen Eigenschaften verbunden mit einer sehr guten Lösemittel- und Chemikalienbeständigkeit. Aufgrund der fluorierten Seitenketten sowie des vergleichsweise niedrigen Gehalts an hydrophilen Gruppen in der Bindemittel-Komponente zeichnen sich die Beschichtungen auch durch eine ausgezeichnete Wasserfestigkeit aus.

Die Applikation des erfindungsgemäßen wässrigen hochvernetzten Anti-Graffiti- und Anti-Soiling Polyurethan-Beschichtungssystems erfolgt mit den aus der Lacktechnologie bekannten Methoden, wie z.B. Fluten, Gießen, Rakeln, Rollen, Spritzen, Streichen, Tauchen, Walzen.

Die Trocknung und Aushärtung der Beschichtungen erfolgt im Allgemeinen bei normalen (Außen- und Innen-)Temperaturen im Bereich von 5 bis 40 °C, d.h. ohne spezielles Erhitzen der Beschichtung, kann jedoch je nach Anwendung auch bei höheren Temperaturen im Bereich von 40 bis 100 °C erfolgen.

Ein weiterer Gegenstand der vorliegenden Erfindung betrifft die Verwendung der erfindungsgemäßen wässrigen hochvernetzten Anti-Graffiti- und Anti-Soiling Polyurethan-Beschichtung im Bau- oder im Industrie-Bereich als formulierte oder unformulierte chemikalienstabile und lichtechte Lack- und/oder Beschichtungssysteme für die Oberflächen von mineralischen Baustoffen, wie z.B. Beton, Gips, Keramik, Ton, Zement, sowie für die Oberflächen von Glas, Gummi, Holz und Holzwerkstoffen, Kunststoff, Metall, Papier, Verbundwerkstoffen oder Leder.

Die erfindungsgemäß vorgeschlagenen wässrigen hochvernetzten Anti-Graffiti- und Anti-Soiling Polyurethan-Beschfchtungssysteme eignen sich außerdem einzeln oder in Kombination zum Systemaufbau von
(*α*) schmutzabweisenden Anti-Graffiti-Coatings auf Kunstoff, Holz oder Metall für z. B. Verkehrsschilder oder Eisenbahnwaggons,
(β) schmutzabweisenden Beschichtungen von Rotoren für Windkraftanlagen,
(γ) schmutzabweisenden Bodenbeläge im Innen- und Außenbereich.

Die Oberflächenenergie eines getrockneten Films, der auf Basis eines erfindungsgemäßen Beschichtungssystems hergestellt wurde, beträgt vorzugsweise weniger als 18,6 mN/rn, dem in der Literatur angegebenen Wert für Teflon®.

Die nachfolgenden Beispiele sollen die Erfindung näher veranschaulichen.

### Beispiele

### Beispiel 1: Fluormodifizierte Diolkomponente. (T-Bone)

In einem Vierhalskolben, ausgerüstet mit KPG-Rührer, Rückflusskühler, Innenthermometer und Stickstoff-Deckung, wurden 0,1 mol 2,4-Toluylendiisocyanat (TDI) (Desmodur T 80, Bayer AG), gelöst in 28,8 g N-Methylpyrrolidon (NMP), unter Stickstoff-Deckung vorgelegt und auf ca. 15-20 °C abgekühlt. Ein Auskristallisieren von 2,4-Toluylendiisocyanat (TDI) sollte dabei unbedingt vermieden werden. Nach Zugabe von 2 Tropfen Dibutylzinndilaureat (DBTL) als Katalysator wurden unter Kühlung innerhalb von ca. 1 h eine äquimolare Menge Fluoralkohol (z.B. Zonyl® BA, Du Pont de Nemours) langsam zugetropft. Nach Beendigung des Zutropfens wurde der Ansatz 1 h bei gleicher Temperatur nachgerührt bis der gewünschte NCO-Wert erreicht wurde. Das Preaddukt wurde anschließend unter Kühlung zu einer äquimolaren Menge Diethanolamin (DEA), vermischt mit 3,0 g N-Methylpyrrolidon (NMP), langsam zugetropft.

Die Reaktion ist beendet, wenn der NCO-Wert auf Null gesunken ist.

### Beispiel 2: Hydroxyfunktionelle fluormodifizierte Polyurethan-Dispersion auf Polycarbonatbasis

In einem Vierhalskolben ausgerüstet, mit KPG-Rührer, Rückflusskühler, Thermometer und Stickstoff-Deckung, wurde ein Gemisch aus 12,36 g fluormodifizierter Diolkomponente (siehe Beispiel 1, enthält 3,71 g N-Methylpyrrolidon (NMP)) und 49,72 g Isophorondiisocyanat (Vestanat® IPDI, Fa. Degussa AG) in Gegenwart von 0,1 g Dibutylzinndilaureat (DBTL) als Katalysator unter Stickstoff-Deckung 1, 5 h bei 80-90 °C gerührt. Nach Zugabe von 8,40 g Dimethylolpropionsäure (DMPA®) 100,00 g eines Polycarbonatdiols mit einer Hydroxyl-Zahl von 56 mg KOH-g⁻¹ (Desmophen® C 200, Fa. Bayer AG) und 26,29 g N-Methyl-pyrrolidon (NMP) zum Preaddukt wurde die Mischung unter Stickstoff- Deckung bei 80-90 °C ca. 50 min weiter gerührt, bis der berechnete NCO-Gehalt erreicht wurde (Theorie: 4,24 Gew.-%). Der Verlauf der Reaktion wurde acidimetrisch verfolgt.

Das Prepolymer wurde dann unter intensivem Rühren in 233,48 g Wasser, versetzt mit 6,02 g Triethylamin (TEA) (indirekte Neutralisation), dispergiert und anschließend mit 16,57 g N-(2-Aminoethyl)-2-aminoethanol (50%ige wässrige Lösung) kettenverlängert.

Es wurde eine stabile Polyurethan-Dispersion mit folgender Charakteristik erhalten:

| Charakteristik | milchig-weiße Flüssigkeit |
|---|---|
| Festkörper-Gehalt | 40 Gew.-% |
| Ladungsdichte | 34,57 meq-(100 g)⁻¹ |
| Fluorgehalt | 2,0 Gew.-% |

### Beispiel 3: Wässriges fluormodifiziertes Zweikomponenten-Polyurethan-Beschichtungsystem auf Basis von Beispiel 2

Durch Einarbeiten von Rhodocoat WT 2102, welches zuvor mit Dipropylenglykoldimethylether(ProglydeDMM®) mittels eines mechanischen Rührers gemischt wurde (9:1), erhält man einen Zweikomponenten-Polyurethanklarlack mit einem NCO/OH-Equivalentverhältnis von 1,3.

| **Komponente** | **Gew.-Teite** | **Beschreibung** |
|---|---|---|
| | **TEIL A** | |
| Beispiel 2 | 991,00 | Polyurethan-Dispersion |
| Byk 024 | 3,00 | Entschäumer |
| Tego Wet 500 | 3,00 | Netzmittel |
| Edaplan LA 413 | 3,00 | Verlaufsadditiv |
| Gesamt: | 1000,00 | Stammlack |

| **TEIL B** | | |
|---|---|---|
| Rhodocoat WT 2102 | 50,00 | wasserdispergierbares Polyisocyanat |
| Proglyde ® DMM | 5,56 | Lösemittel |
| Gesamt: | 55, 56 | Härter |

### Beispiel 4: Hydroxyfunktionelle fluormodifizierte Oligourethan-Dispersion, kettengestoppt mit Trimethylolpropan (TMP)

In einem Vierhalskolben, ausgerüstet mit KPG-Rührer, Rückflusskühler, Thermometer und Stickstoff-Deckung, wurde ein Gemisch aus 12,15 g fluormodifizierter Diolkomponente (siehe Beispiel 1, enthält 3,65 g N-Methylpyrrolidon (NMP)), 100,00 g eines Polycarbonatdiols mit einer Hydroxyl-Zahl von 56 mg KOH·g⁻¹ (Desmophen® C 200, Fa. Bayer AG) und 43,55 g Isophorondüsocyanat (Vestanat® IPDI, Fa. Degussa AG) in Gegenwart von 0,1 g Dibutylzinndilaureat (DBTL) als Katalysator unter Stickstoff-Deckung 2,0 h bei 80-90 °C gerührt. Nach Zugabe von 4,90 g Dimethylolpropionsäure (DMPA®)), gelöst in 11,35 g N-Methylpyrrolidon (NMP) zum Preaddukt, wurde die Mischung unter Stickstoff-Deckung bei 80-90 °C weiter gerührt, bis der berechnete NCO-Gehalt erreicht wurde (Theorie: 4,18 Gew.-%). Der Verlauf der Reaktion wurde acidimetrisch verfolgt.

Anschließend wurden 26,30 g Trimethylolpropan gelöst in 25,00 g N-Methylpyrrolidon (NMP) zugegeben und der Ansatz für weitere 4 h bei 80-90 °C gerührt, bis der NCO-Wert auf Null gesunken war. Nach dem Abkühlen auf 60 °C wurde das Prepolymer mit 3,33 g an Triethylamin (TEA) direkt neutralisiert. Das Prepolymer wurde dann unter intensivem Rühren in 240,00 g Wasser dispergiert.

Es wurde eine stabile Oligourethan-Dispersion mit folgender Charakteristik erhalten:

| Charakteristik | semitransluzente Flüssigkeit |
|---|---|
| Festkörper-Gehalt | 40 Gew.-% |
| Ladungsdichte | 19,57 meq·(100g)⁻¹ |
| Fluorgehalt | 2,0 Gew.-% |

### Beispiel 5: Wässriges fluormodifiziertes Zweikomponenten-Polyurethan-Beschichtungsystem (hochvernetzt) auf Basis von Beispiel 4

Durch Einarbeiten von Rhodocoat WT 2102, welches zuvor mit Dipropylenglykoldimethylether(ProglydeDMM®) mittels eines mechanischen Rührers gemischt wurde (9:1), erhält man einen Zweikomponenten-Polyurethanklarlack mit einem NCO/OH- Equivalentverhältnis von 1,1.

| **Komponente** | **Gew.-Teile** | **Beschreibung** |
|---|---|---|
| **TEIL A** | | |
| Beispiel 4 | 991,00 | Oligourethan-Dispersion |
| Byk 024 | 3,00 | Entschäumer |
| Tego Wet 500 | 3,00 | Netzmittel |
| Edaplan LA 413 | 3,00 | Verlaufsadditiv |
| Gesamt: | 1000,00 | Stammlack |

| **TEIL B** | | |
|---|---|---|
| Rhodocoat WT 2102 | 202,40 | wasserdispergierbares Polyisocyanat |
| Proglyde® DMM | 22,49 | Lösemittel |
| Gesamt: | 224,89 | Härter |

### Beispiel 6: Fluormodifizierte Polyurethan-Dispersion auf Polyesterbasis

In einem Vierhalskolben, ausgerüstet mit KPG-Rührer, Rückflusskühler, Thermometer und Stickstoff-Deckung, wurde ein Gemisch aus 12,43 g fluormodifizierter Diolkomponente (siehe Beispiel 1, enthält 3,73 g N-Methylpyrrolidon (NMP)) und 102,16 g Isophorondüsocyanat (Vestanat° IPDI, Fa. Degussa AG) in Gegenwart von 0,1 g Dibutyl- zinndilaureat (DBTL) als Katalysator unter Stickstoff-Deckung 1,5 h bei 80-90 °C gerührt. Nach Zugabe von 14,00 g 1,4-Butandiol, 15,00 g Dimethylolpropionsäure (DMPA®), 100,00 g eines Polyesterdiols mit einer Hydroxyl-Zahl von ca: 56,1 mg KOH·g⁻¹ (Bester® 42 H, Fa. Poliolchimica S.p.A.), alles gelöst in 46,27 g N-Methylpyrrolidon (NMP), wurde die Mischung unter Stickstoff-Deckung bei 80-90 °C eine weitere Stunde gerührt, bis der berechnete NCO-Gehalt erreicht wurde (Theorie: 3,81 Gew.-%). Der Verlauf der Reaktion wurde acidimetrisch verfolgt.

Das Prepolymer wurde dann unter intensivem Rühren in 341,41 g Wasser, versetzt mit 11,32 g Triethylamin (TEA) (indirekte Neutralisation), dispergiert und anschließend mit 33,12 g Ethylendiamin (16,7%ige wässrige Lösung) kettenverlängert.

Es wurde eine stabile Polyurethan-Dispersion mit folgender Charakteristik erhalten:

| Charakteristik | semitransluzente Flüssigkeit |
|---|---|
| Festkörper-Gehalt | 38 Gew.-% |
| Ladungsdichte | 43, 55 meq·(100 g)⁻¹ |
| Fluorgehalt | 1,5 Gew.-% |

### Oberflächenenergien von ausgehärteten Filmen der erfindungsgemäßen wässrigen fluormodifizierten Polyurethan-Beschichtungsysteme

Die wässrigen fluormodifizierten Zweikomponenten-Polyurethan-Beschichtungen, gemäß den Beispielen 3, 5 und 6, wurden mittels Aufziehrakel auf Glasplatten aufgezogen (Nassfilmstärke 150 *µ*m) und die Filme anschließend bei Raumtemperatur getrocknet. Nach 7 Tagen wurden sie mit Hilfe der Sessile Drop Methode bestimmt, indem die Kontaktwinkel einer Serie von apolaren Flüssigkeiten (Hexadecan, Dodecan, Decan und Octan) auf den Filmoberflächen gemessen wurden.

Die Prüfergebnisse sind in der nachfolgenden Tabelle aufgeführt.

| | **Bsp. 3** | **Bsp. 5** | **Bsp. 6** | **Vergleichsdispersion (nicht modifiziert)** |
|---|---|---|---|---|
| Filmtransparenz | klar | klar | klar | klar |
| Oberflächenenergie eines getrockneten Films [mN/m] | 15,8 | 19,6 | 21,7 | 44,3 |

## Patentansprüche

1. Wässriges fluormodifiziertes Polyurethansystem für ein- oder zweikomponentige Anti-Graffiti- und Anti-Soiling-Beschichtungen, erhältlich durch
(a) die Herstellung einer Bindemittel-Komponente auf Basis einer wässrigen Lösung oder Dispersion von gegebenenfalls hydroxy- und/oder aminofunktionellen Oligo- bzw. Polyurethanen mit fluorierten Seitenketten, wobei man
(a₁) 2,5 bis 12 Gewichtsteile einer fluormodifizierten Polyol-Komponente (A)(i) mit zwei oder mehr gegenüber Isocyanaten reaktiven Hydroxyl-Gruppen und einer Molekularmasse von 500 bis 2000 Dalton, wobei als Komponente (A)(i) Umsetzungsprodukte bzw. Makromonomere aus monofunktionellen Fluoralkoholen, aliphatischen und/oder aromatischen Diisocyanaten und Diethanolamin eingesetzt werden, wobei die Fluoralkohole Perfluoralkylalkohole mit terminalen Methylen-Gruppen (Kohlenwasserstoff-Spacern) der allgemeinen Formel
F(CF₂)ₓ-(CH₂)_{y}-OH,
mit x = 4-20 und y = 1-6
oder Hexafluorpropenoxid (HFPO)-Oligomer-Alkohole der allgemeinen Formel
CF₃CF₂CF₂O-(CF(CF₃)CF₂O)_{z}-CF(CF₃)CH₂-OH,
mit z = 1-10
oder Gemische aus diesen sind, 10 bis 50 Gewichtsteile einer höhermolekularenPolyol-Komponente (A) (ii) mit zwei oder mehr gegenüber Polyisocyanaten reaktiven Hydroxyl-Gruppen und einer Molekularmasse von 500 bis 6000 Dalton sowie 0 bis 10 Gewichtsteile einer niedermolekularen Polyol-Komponente (A)(iii) mit zwei oder mehr gegenüber Polyisocyanaten reaktiven Hydroxyl-Gruppen und einer Molekularmasse von 50 bis 499 Dalton mit t 2 bis 30 Gewichtsteilen einer Polyisocyanat-Komponente (B), bestehend aus mindestens einem Polyisocyanat, Polyisocyanat-Derivat oder Polyisocyanat-Homologen mit zwei oder mehreren aliphatischen oder aromatischen Isocyanat-Gruppen, unter Zugabe von 0 bis 25 Gewichtsteilen einer Lösemittel-Komponente (C), bestehend aus einem inerten organischen Lösemittel, gegebenenfalls in Gegenwart eines Katalysators zur Reaktion bringt,
(a₂) das Polyurethan-Preaddukt aus Stufe (a₁) mit 0,1 bis 10 Gewichtsteilen einer niedermolekularen und anionisch modifizierbaren Polyol- oder Polyamin-Komponente (A)(iv) mit zwei oder mehr gegenüber Polyisocyanaten reaktiven Hydroxyl- und/oder Amino-Gruppen und einer oder mehreren inerten Carbonsäure- und/oder SulfonsäureGruppe(n), welche mit Hilfe von Basen teilweise oder vollständig in Carboxylat- bzw. Sulfonatgruppen überführt werden können oder bereits in Form von Carboxylat und/oder Sulfonat-Gruppen vorliegen, mit einer Molekularmasse von 100 bis 1000 Dalton und/oder mit 0 bis 20 Gewichtsteilen einer polymeren Polyol-Komponente (A)(v) mit zwei oder mehr gegenüber Polyisocyanaten reaktiven Hydroxyl-Gruppen und weiteren gegenüber Polyisocyanaten inerten hydrophilen Gruppen mit einer Molekularmasse von 500 bis 5000 Dalton, gegebenenfalls in Gegenwart eines Katalysators umsetzt,
(a₃) die freien Isocyanat-Gruppen des Polyurethan-Prepolymers aus Stufe (a₂) vollständig oder teilweise mit 0 bis 15 Gewichtsteilen einer multifunktionellen Kettenstopper-Komponente (D) mit drei oder mehr gegenüber Isocyanat-Gruppen reaktiven Hydroxyl- und/oder primären und/oder sekundären Amino-Gruppen und einer Molekularmasse von 50 bis 500 Dalton umsetzt, von denen eine mit dem Polyurethan-Prepolymer abreagiert,
(a₄) das multifunktionelle Polyurethan- Oligomer oder -Polymer aus Stufe (a₃) zur teilweisen oder vollständigen Neutralisation der Säure-Gruppen mit 0,1 bis 10 Gewichtsteilen einer Neutralisations- Komponente (E) versetzt und anschließend
(a₅) das neutralisierte Polyurethan-Oligomer oder -Polymer aus Stufe (a₄) in 40 bis 120 Gewichtsteilen Wasser, welches noch 0 bis 50 Gewichtsteile einer Formulierungs-Komponente (F) enthalten kann, dispergiert
(a₆) das nur teilweise kettengestoppte Polyurethan-Oligomer oder -Polymer aus Stufe (a₅) noch mit 0 bis 10 Gewichtsteilen einer Kettenverlängerungs-Komponente (G) mit zwei oder mehr gegenüber lsocyanat-Gruppen reaktiven primären und/oder sekundären Amino- Gruppen und einer Molekularmasse von 50 bis 500 Dalton umsetzt
sowie gegebenenfalls
(b) die anschließende Umsetzung der Bindemittel-Komponente aus den Stufen (a₄), (a₅) oder (a₆) mit 20 bis 100 Gewichtsteilen einer Vernetzer-Komponente (H), wobei als Vernetzer-Komponente (H) wasserdispergierbare Polyisocyanate mit aliphatisch und/oder cycloaliphatisch und/oder aromatisch gebundenen Isocyanat- Gruppen eingesetzt werden, welche 0 bis 20 Gewichtsteile eines organischen Lösemittels enthalten können.

2. Polyurethansystem nach Anspruch 1,
**dadurch gekennzeichnet,**
**dass** die hochmolekulare Polyol-Komponente (A)(ii) aus einem hydrophob modifizierten Polyether- und/oder Polyester- und/oder Polycaprolacton- und/oder Polycarbonat-Polyoi und/oder α,ω,-Polymethacrylatdiol oder geeigneten Kombinationen daraus besteht.

3. Polyurethansystem nach einem der Ansprüche 1 oder 2,
**dadurch gekennzeichnet,**
**dass** als Komponente A(ii) lineare bzw. difunktionelle Polyester- und/oder Polycaprolacton- und/oder Polycarbonat-Polyole mit einer Molekularmasse von 1000 bis 3000 Dalton eingesetzt werden.

4. Polyurethansystem nach einem der Ansprüche 1 bis 3,
**dadurch gekennzeichnet,**
**dass** als Komponente (A)(iii) 1,4-Butandiol und/oder 2-Methyl-1,3-propandiol und/oder Neopentylglykol eingesetzt wird.

5. Polyurethansystem nach einem der Ansprüche 1 bis 4,
**dadurch gekennzeichnet,**
**dass** es sich bei der Komponente (A)(iv) um eine Bishydroxyalkancarbon- säure oder Bishydroxysulfonsäure bzw. deren Alkalisalze mit einer Molekularmasse von 100 bis 1000 Dalton handelt.

6. Polyurethansystem nach Anspruch 5,
**dadurch gekennzeichnet,**
**dass** als Bishydroxyalkancarbonsäure 2-Hydroxymethyl-2-methyl-3-hydroxypropionsäure bzw. Dimethylolpropionsäure eingesetzt wird.

7. Polyurethansystem nach einem der Ansprüche 1 bis 6,
**dadurch gekennzeichnet,**
**dass** als Komponente (A)(v) Umsetzungsprodukte aus Poly-(ethylenoxid [-*co*/*block*/*ran*-propylenoxid])-monoalkylethern, einem Diisocyanat und Diethanolamin eingesetzt werden.

8. Polyurethansystem nach einem der Ansprüche 1 bis 7,
**dadurch gekennzeichnet,**
**dass** als multifunktionelle Kettenstopper-Komponente (D) aliphatische oder cycloaliphatische Polyole und/oder Polyamine und/oder Aminoalkohole eingesetzt werden.

9. Polyurethansystem nach Anspruch 8,
**dadurch gekennzeichnet,**
**dass** als multifunktionelle Kettenstopper-Komponente (D) Diethanolamin, Trimethylolpropan, Pentaerythrit, Kohlenhydrate und/oder deren Derivate eingesetzt werden.

10. Polyurethansystem nach einem der Ansprüche 1 bis 9,
**dadurch gekennzeichnet,**
**dass** als Formulierungs-Komponente (F) Entschäumer, Entlüfter, Gleit- und Verlaufadditive, strahlenhärtende Additive, Dispergieradditive, Substratnetzadditive, Hydrophobierungsmittel, Rheologieadditive, wie Polyurethan-Verdicker, Koaleszenzhilfsmittel, Mattierungsmittel, Haftvermittler, Frostschutzmittel, Antioxidantien, UV-Stabilisatoren, Bakterizide, Fungizide, weitere Polymere und/oder Polymer-Dispersionen sowie Füllstoffe, Pigmente, Mattierungsmittel oder geeignete Kombination daraus eingesetzt werden.

11. Polyurethansystem nach einem der Ansprüche 1 bis 10,
**dadurch gekennzeichnet,**
**dass** das NCO/OH-EquiValent-Verhähnis der Komponenten (A) und (B) einen Wert von 1,2 bis 2,5, vorzugsweise 1,5 bis 2,25, aufweist.

12. Polyurethansystem nach einem der Ansprüche 1 bis 11,
**dadurch gekennzeichnet,**
**dass** als Vernetzer-Komponente (H) wasserdispergierbare Polyisocyanate mit aliphatisch und/oder cycloaliphatisch und/oder aromatisch gebundenen Isocyanat-Gruppen eingesetzt werden, welche 0 bis 20 Gewichtsteile eines organischen Lösemittels enthalten.

13. Polyurethansystem nach einem der Ansprüche 1 bis 12,
**dadurch gekennzeichnet,**
**dass** die Reaktionsstufen (a₁) und (a₂) in Gegenwart von 0,01 bis 1 Gew.-% bezogen auf die Komponenten (A) und (B) eines für Polyadditionsreaktionen an Polyisocyanate üblichen Katalysators durchgeführt werden.

14. Polyurethansystem nach einem der Ansprüche 1 bis 13,
**dadurch gekennzeichnet,**
**dass** die Neutralisationskomponente (E) in einer solchen Menge zugegeben wird, dass der Neutralisationsgrad bezogen auf die freien Carbonsäure- und/oder Sulfonsäure-Gruppen des Polyurethan-Oligomers- oder -Polymers aus den Komponenten (A), (B), (D), (E) und (G) bei 60 bis 100 Equivalent-%, vorzugsweise bei 80 bis 95 Equivaient-% liegt.

15. Polyurethansystem nach einem der Ansprüche 1 bis 14,
**dadurch gekennzeichnet,**
**dass** die Kettenstopperkomponente (D) in einer solchen Menge zugesetzt wird, dass der Kettenstoppungsgrad bezogen auf die freien Isocyanat- Gruppen des Polyurethan-Prepolymers aus den Komponenten (A) und(B) bei 0 bis 100 Equivalent-% liegt.

16. Polyurethansystem nach einem der Ansprüche 1 bis 15,
**dadurch gekennzeichnet,**
**dass** die Kettenverlängerungskomponente (G) in einer solchen Menge zugesetzt wird, dass der Kettenverlängerungsgrad bezogen auf die freien Isocyanat-Gruppen des Polyurethan-Oligomers oder -Polymers aus den Komponenten (A), (B), (D) und (E) bei 0 bis 95 Equivalent-% liegt.

17. Polyurethansystem nach einem der Ansprüche 1 bis 16,
**dadurch gekennzeichnet,**
**dass** der Festkörpergehalt an Polyurethan-Oligomer oder -Polymer bestehend aus den Komponenten (A), (B), (D), (E) und (G) auf 35 bis 60 Gew.-%, vorzugsweise 40 bis 50 Gew.-% bezogen auf die Gesamtmenge der wässrigen Bindemittel-Komponente bestehend aus den Komponenten (A) bis (E) und (G) eingestellt wird.

18. Polyurethansystem nach einem der Ansprüche 1 bis 17,
**dadurch gekennzeichnet,**
**dass** die mittlere Partikelgröße der Micellen der wässrigen Bindemittel-Komponente bestehend aus den Komponenten (A) bis (E) und (G) 10 bis 300 nm beträgt.

19. Polyurethansystem nach einem der Ansprüche 1 bis 18,
**dadurch gekennzeichnet,**
**dass** das Polyurethan Oligomer oder -Polymer bestehend aus den Komponenten (A), (B), (D), (E) und (G) eine mittlere Molekularmasse von 2000 bis 100000 Dalton aufweist.

20. Polyurethansystem nach einem der Ansprüche 1 bis 19,
**dadurch gekennzeichnet,**
**dass** das Verhältnis von Vernetzer-Komponente (H) zur Bindemittel-Komponente aus den Komponenten (A) bis (E) oder (A) bis (F) 1:3 bis 1:5 beträgt.

21. Verfahren zur Herstellung des wässrigen Polyurethansystems nach den Ansprüchen 1 bis 20,
**dadurch gekennzeichnet,**
**dass** man in der Reaktionsstufe
(a₁) die Komponenten (A)(i), (A)(ii), (A)(iii), (B) und (C) gegebenenfalls in Gegenwart eines Katalysators zu einem Polyurethan-Preaddukt zur Reaktion bringt, wobei die Hydroxyl-Gruppen der Komponenten (A)(i), (A)(ii) und (A)(iii) teilweise oder vollständig mit den Isocyanat-Gruppen der Komponente (B) umgesetzt werden,
(a₂) das Polyurethan-Preaddukt aus Reaktionsstufe (a₁) mit den Komponenten (A)(iv) und (A)(v) zur Reaktion bringt,
(a₃) gegebenenfalls das anionisch modifizierbare Polyurethan-Prepolymer aus Reaktionsstufe (a₂) mit der Komponente (D) zur Reaktion bringt, wobei jeweils nur eine reaktive Gruppe der Komponente (D) mit einer Isocyanat-Gruppe des Polyurethan-Preaddukts abreagiert,
(a₄) das funktionalisierte und anionisch modifizierbare Polyurethan-Oligomer oder-Polymer aus Reaktionsstufe (a₃), das gegebenenfalls zwei oder mehrere reaktive Gruppen pro Kettenende und eine Gesamtfunktionalität von ≥4 aufweist, zur teilweisen oder vollständigen Neutralisation mit der Komponente (E) zur Reaktion bringt und anschließend
(a₅) das funktionalisierte und anionisch modifizierte Polyurethan-Oligomer oder -Polymer aus Reaktionsstufe (a₄) in Wasser, welches gegebenenfalls noch die Komponente (F) enthält, dispergiert,
(a₆) gegebenenfalls das nur teilweise kettengestoppte, funktionalisierte und anionisch modifizierte Polyurethan-Oligomer oder -Polymer aus Stufe (a₅) mit der Komponente (G) zur Reaktion bringt und gegebenenfalls
(b) die Bindemittel-Komponente aus Reaktionstufe (a₅) oder Reaktionsstufe (a₆) mit der gegebenenfalls hydrophil modifizierten Vernetzer-Komponente (H) zur Reaktion bringt, wobei die Vernetzer-Komponente (H) zur Bindemittel-Komponente gegeben wird und nach der Applikation ein hochvernetztes Anti-Graffiti- und Anti-Soiling-Beschichtungssystem erhalten wird.

22. Verfahren nach Anspruch 21,
**dadurch gekennzeichnet,**
**dass** die Stufen (a₄) und (a₅) so zusammengefasst werden, dass die Komponente (E) dem Wasser vor dem Dispergieren zugesetzt wird.

23. Verfahren nach einem der Ansprüche 21 bis 22,
**dadurch gekennzeichnet,**
**dass** die Stufen (a₅) und (a₆) so zusammengefasst werden, dass die Komponente (G) dem Wasser -vor dem Dispergieren zugesetzt wird.

24. Verfahren nach einem der Ansprüche 21 bis 23,
**dadurch gekennzeichnet,**
**dass** man die Reaktionstufen (a₁) bis (a₃) bei einer Temperatur bei 60 bis 120 °C, vorzugsweise bei 80 bis 100 °C, durchführt.

25. Verfahren nach einem der Ansprüche 21 bis 24,
**dadurch gekennzeichnet,**
**dass** man die Reaktionstufe (a₄) bei einer Temperatur von 40 bis 65 °C, vorzugsweise bei ca. 50 °C, durchführt.

26. Verfahren nach einem der Ansprüche 21 bis 25,
**dadurch gekennzeichnet,**
**dass** man die Reaktionsstufen (a₅) und (a₆) bei 30 bis 50 °C, vorzugsweise bei ca. 40 °C, durchführt.

27. Verfahren nach einem der Ansprüche 21 bis 26,
**dadurch gekennzeichnet,**
**dass** man die Reaktionsstufe (b) bei einer Temperatur von 20 bis 40 °C, vorzugsweise bei ca. 20 °C, durchführt.

28. Verwendung des unformulierten oder formulierten wässrigen fluormodifizierten ein- oder zweikomponentigen Polyurethansystems nach den Ansprüchen 1 bis 20 im Bau- oder Industrie-Bereich als lichtechte und chemikaliensbeständige Anti-Graffiti und Anti-Soiling-Beschichtungssysteme für die Oberflächen von mineralischen Bauwerkstoffen, wie z.B. Beton, Zement sowie Glas, Holz und Holzwerkstoffe, Papier, Metall und Kunststoff.

29. Verwendung nach Anspruch 28,
**dadurch gekennzeichnet,**
**dass** das Polyurethansystem einzeln oder in Kombination zum Systemaufbau von
(α) schmutzabweisenden Anti-Graffiti-Coatings auf Kunststoff, Holz oder Metall für z.B. Verkehrsschilder oder Eisenbahnwaggons,
(β) schmutzabweisenden Beschichtungen von Rotoren für Windkraftanlagen,
(γ) schmutzabweisenden Bodenbeläge im Innen- und Außenbereich.
eingesetzt wird.

## Claims

1. Aqueous fluoromodified polyurethane system for one- or two-component anti-graffiti and anti-soiling coatings, obtainable by
(a) preparing a binder component based on an aqueous solution or dispersion of hydroxyl- and/or amino-functional oligo- and/or polyurethanes optionally having fluorinated side chains, for which
(a₁) from 2.5 to 12 parts by weight of a fluoromodified polyol component (A)(i) having two or more isocyanate-reactive hydroxyl groups and a molecular mass of from 500 to 2 000 daltons, where as component (A)(i) reaction products and/or macromonomers of monofunctional fluoroalcohols, aliphatic and/or aromatic diisocyanates, and diethanolamine are used, the fluoroalcohols being perfluoroalkyl alcohols having terminal methylene groups (hydrocarbon spacers) of the general formula
F(CF₂)ₓ-(CH₂)_{y}-OH
with x = 4-20 and y = 1-6
or hexafluoropropene oxide (HFPO) oligomer alcohols of the general formula
CF₃CF₂CF₂O-(CF(CF₃)CF₂O)_{z}-CF(CF₃)CH₂-OH,
with z = 1-10
or mixtures of these, from 10 to 50 parts by weight of a high molecular mass polyol component (A)(ii) having two or more polyisocyanate-reactive hydroxyl groups and a molecular mass of from 500 to 6 000 daltons, and from 0 to 10 parts by weight of a low molecular mass polyol component (A)(iii) having two or more polyisocyanate-reactive hydroxyl groups and a molecular mass of from 50 to 499 daltons are reacted with from 2 to 30 parts by weight of a polyisocyanate component (B), composed of at least one polyisocyanate, polyisocyanate derivative or polyisocyanate homolog having two or more aliphatic or aromatic isocyanate groups, with the addition of from 0 to 25 parts by weight of a solvent component (C) composed of an inert organic solvent, optionally in the presence of a catalyst,
(a₂) the polyurethane preadduct from stage (a₁) is reacted, optionally in the presence of a catalyst, with from 0.1 to 10 parts by weight of a low molecular mass, anionically modifiable polyol component or polyamine component (A)(iv) having two or more polyisocyanate-reactive hydroxyl and/or amino groups and one or more inert carboxylic and/or sulfonic acid groups, some or all of which can be converted by means of bases into carboxylate and/or sulfonate groups, respectively, or are already in the form of carboxylate and/or sulfonate groups, having a molecular mass of from 100 to 1 000 daltons and/or with from 0 to 20 parts by weight of a polymeric polyol component (A) (v) having two or more polyisocyanate-reactive hydroxyl groups and further, polyisocyanate-inert, hydrophilic groups, having a molecular mass of from 500 to 5 000 daltons,
(a₃) some or all of the free isocyanate groups of the polyurethane prepolymer from stage (a₂) are reacted with from 0 to 15 parts by weight of a polyfunctional chain terminator component (D) having three or more isocyanato-reactive hydroxyl and/or primary and/or secondary amino groups and a molecular mass of from 50 to 500 daltons, of which one reacts with the polyurethane prepolymer,
(a₄) the polyfunctional polyurethane oligomer or polymer from stage (a₃) is admixed, for neutralization of some or all of the acid groups, with from 0.1 to 10 parts by weight of a neutralizing component (E), and then
(a₅) the neutralized polyurethane oligomer or polymer from stage (a₄) is dispersed in from 40 to 120 parts by weight of water, which may also contain from 0 to 50 parts by weight of a formulating component (F), and
(a₆) the only partly chain-terminated polyurethane oligomer or polymer from stage (a₅) is further reacted with from 0 to 10 parts by weight of a chain extender component (G) having two or more isocyanato-reactive primary and/or secondary amino groups and a molecular mass of from 50 to 500 daltons,
and, optionally,
(b) subsequently reacting the binder component from stages (a₄), (a₅) or (a₆) with from 20 to 100 parts by weight of a crosslinker component (H), said crosslinker component (H) comprising water-dispersible polyisocyanates having aliphatically and/or cycloaliphatically and/or aromatically attached isocyanate groups and possibly containing from 0 to 20 parts by weight of an organic solvent.

2. Polyurethane system according to Claim 1, **characterized in that** the high molecular mass polyol component (A)(ii) is composed of a hydrophobically modified polyether- and/or polyester- and/or polycaprolactone- and/or polycarbonate-polyol and/or α,ω-polymethacrylatediol or of suitable combinations thereof.

3. Polyurethane system according to one of Claims 1 or 2, **characterized in that** as component A(ii) linear and/or difunctional polyester- and/or polycaprolactone- and/or polycarbonate-polyols having a molecular mass of from 1 000 to 3 000 daltons are used.

4. Polyurethane system according to one of Claims 1 to 3, **characterized in that** as component (A)(iii) 1,4-butanediol and/or 2-methyl-1,3-propanediol and/or neopentyl glycol is used.

5. Polyurethane system according to one of Claims 1 to 4, **characterized in that** component (A)(iv) is a bishydroxyalkanecarboxylic acid or bishydroxysulfonic acid and/or alkali metal salts thereof having a molecular mass of from 100 to 1 000 daltons.

6. Polyurethane system according to Claim 5, **characterized in that** as bishydroxyalkanecarboxylic acid 2-hydroxymethyl-2-methyl-3-hydroxypropionic acid or dimethylolpropionic acid is used.

7. Polyurethane system according to one of Claims 1 to 6, **characterized in that** as component (A)(v) reaction products of poly(ethylene oxide[*co*/*block*/*ran*-propylene oxide]) monoalkyl ethers, a diisocyanate, and diethanolamine are used.

8. Polyurethane system according to one of Claims 1 to 7, **characterized in that** as polyfunctional chain terminator component (D) aliphatic or cycloaliphatic polyols and/or polyamines and/or amino alcohols are used.

9. Polyurethane system according to Claim 8, **characterized in that** as polyfunctional chain terminator component (D) diethanolamine, trimethylolpropane, pentaerythritol, carbohydrates and/or derivatives thereof are used.

10. Polyurethane system according to one of Claims 1 to 9, **characterized in that** as formulating component (F) defoamers, devolatilizers, lubricant and levelling additives, radiation curing additives, dispersing additives, substrate wetting additives, hydrophobicizing agents, rheological additives, such as polyurethane thickeners, coalescence aids, flatting agents, adhesion promoters, antifreeze agents, antioxidants, UV stabilizers, bactericides, fungicides, further polymers and/or polymer dispersions, and also fillers, pigments, flatting agents, or suitable combinations thereof are used.

11. Polyurethane system according to one of Claims 1 to 10, **characterized in that** the NCO/OH equivalent ratio of components (A) and (B) has a value of from 1.2 to 2.5, preferably from 1.5 to 2.25.

12. Polyurethane system according to one of Claims 1 to 11, **characterized in that** as crosslinker component (H) water-dispersible polyisocyanates having aliphatically and/or cycloaliphatically and/or aromatically attached isocyanate groups are used which contain from 0 to 20 parts by weight of an organic solvent.

13. Polyurethane system according to one of Claims 1 to 12, **characterized in that** reaction stages (a₁) and (a₂) are conducted in the presence of from 0.01 to 1% by weight, based on components (A) and (B), of a catalyst customary for polyaddition reactions with polyisocyanates.

14. Polyurethane system according to one of Claims 1 to 13, **characterized in that** the neutralizing component (E) is added in an amount such that the degree of neutralization, based on the free carboxylic and/or sulfonic acid groups of the polyurethane oligomer or polymer formed from components (A), (B), (D), (E), and (G), is from 60 to 100 equivalent%, preferably from 80 to 95 equivalent%.

15. Polyurethane system according to one of Claims 1 to 14, **characterized in that** the chain terminator component (D) is added in an amount such that the level of chain termination, based on the free isocyanate groups of the polyurethane prepolymer formed from components (A) and (B), is from 0 to 100 equivalent%.

16. Polyurethane system according to one of Claims 1 to 15, **characterized in that** the chain extender component (G) is added in an amount such that the degree of chain extension, based on the free isocyanate groups of the polyurethane oligomer or polymer formed from components (A), (B), (D), and (E), is from 0 to 95 equivalent%.

17. Polyurethane system according to one of Claims 1 to 16, **characterized in that** the solids content in terms of polyurethane oligomer or polymer composed of components (A), (B), (D), (E), and (G) is adjusted to from 35 to 60% by weight, preferably from 40 to 50% by weight, based on the total amount of the aqueous binder component composed of components (A) to (E) and (G).

18. Polyurethane system according to one of Claims 1 to 17, **characterized in that** the average particle size of the micelles of the aqueous binder component composed of components (A) to (E) and (G) is from 10 to 300 nm.

19. Polyurethane system according to one of Claims 1 to 18, **characterized in that** the polyurethane oligomer or polymer composed of components (A), (B), (D), (E), and (G) has an average molecular mass of from 2 000 to 100 000 daltons.

20. Polyurethane system according to one of Claims 1 to 19, **characterized in that** the ratio of crosslinker component (H) to the binder component formed from components (A) to (E) or (A) to (F) is from 1:3 to 1:5.

21. Process for preparing the aqueous polyurethane system according to Claims 1 to 20, **characterized in that** in reaction stage
(a₁) components (A)(i), (A)(ii), (A)(iii), (B) and (C) are reacted, optionally in the presence of a catalyst, to form a polyurethane preadduct, some or all of the hydroxyl groups of components (A)(i), (A) (ii) and (A)(iii) being reacted with the isocyanate groups of component (B),
(a₂) the polyurethane preadduct from reaction stage (a₁) is reacted with components (A)(iv) and (A)(v),
(a₃) optionally the anionically modifiable polyurethane prepolymer from reaction stage (a₂) is reacted with component (D), in each case only one reactive group of component (D) reacting with an isocyanate group of the polyurethane preadduct,
(a₄) the functionalized and anionically modifiable polyurethane oligomer or polymer from reaction stage (a₃), which optionally has two or more reactive groups per chain end and a total functionality of ≥ 4, is reacted with component (E) for complete or partial neutralization, and subsequently
(a₅) the functionalized and anionically modified polyurethane oligomer or polymer from reaction stage (a₄) is dispersed in water, which optionally additionally comprises component (F),
(a₆) optionally the only partly chain-terminated, functionalized, and anionically modified polyurethane oligomer or polymer from stage (a₅) is reacted with component (G), and optionally
(b) the binder component from reaction stage (a₅) or reaction stage (a₆) is reacted with the optionally hydrophilically modified crosslinker component (H), the crosslinker component (H) being added to the binder component and, following application, a highly crosslinked anti-graffiti and anti-soiling coating system being obtained.

22. Process according to Claim 21, **characterized in that** stages (a₄) and (a₅) are integrated with one another such that component (E) is added to the water prior to dispersing.

23. Process according to one of Claims 21 to 22, **characterized in that** stages (a₅) and (a₆) are integrated with one another such that component (G) is added to the water prior to dispersing.

24. Process according to one of Claims 21 to 23, **characterized in that** reaction stages (a₁) to (a₃) are conducted at a temperature of from 60 to 120°C, preferably from 80 to 100°C.

25. Process according to one of Claims 21 to 24, **characterized in that** reaction stage (a₄) is conducted at a temperature of from 40 to 65°C, preferably at around 50°C.

26. Process according to one of Claims 21 to 25, **characterized in that** reaction stages (a₅) and (a₆) are conducted at from 30 to 50°C, preferably at around 40°C.

27. Process according to one of Claims 21 to 26, **characterized in that** reaction stage (b) is conducted at a temperature of from 20 to 40°C, preferably at around 20°C.

28. Use of the unformulated or formulated aqueous fluoromodified one- or two-component polyurethane system according to Claims 1 to 20 in the construction sector or industrial sector as lightfast and chemical-resistant anti-graffiti and anti-soiling coating systems for the surfaces of mineral building materials, such as concrete, cement and also glass, wood and wood-based materials, paper, metal, and plastic.

29. Use according to Claim 28, **characterized in that** the polyurethane system is used, individually or in combination, for constructing systems for
(α) dirt-repellent anti-graffiti coatings on plastic, wood or metal for traffic signs or rail wagons, for example,
(β) dirt-repellent coatings of rotors for wind power plants,
(γ) dirt-repellent interior floor coverings and exterior ground coverings.

## Revendications

1. Système polyuréthane aqueux modifié par un fluor pour des revêtements anti-graffiti et anti-pollution à un ou deux composants, pouvant être obtenus
(a) par la production d'un composant liant à base d'une solution ou dispersion aqueuse d'oligouréthanes ou polyuréthanes, éventuellement à fonction hydroxy et/ou amino, comportant des chaînes latérales fluorées, où
(a₁) on met en réaction, le cas échéant, en présence d'un catalyseur, 2,5 à 12 parties en poids d'un composant polyol modifié par un fluor (A)(i) avec deux groupes hydroxyle ou plus réagissant aux isocyanates et d'une masse moléculaire de 500 à 2000 Dalton, le composant (A)(i) mis en oeuvre étant des produits de la conversion respectivement des macromonomères d'alcools fluorés monofonctionnels, de diisocyanates aliphatiques et/ou aromatiques et de la diéthanolamine, les alcools fluorés étant des alcools perfluoralkyliques comportant des groupes méthylène terminaux (espaceurs d'hydrogène) de formule générale
F(CF₂)ₓ-(CH₂)_{y}-OH,
avec x=4 à 20 et y=1 à 6
ou des alcools oligomères d'oxyde d'hexafluoropropène (HFPO) de formule générale
CF₃CF₂CF₂O-(CF(CF₃)CF₂O)_{z}-CF(CF₃)CH₂-OH,
avec z = 1 à 10
ou des mélanges de ceux-ci, 10 à 50 parties en poids d'un composant polyol à plus haut poids moléculaire (A)(ii) avec deux groupes hydroxyle ou plus réagissant aux polyisocyanates et d'une masse moléculaire de 500 à 6000 Dalton ainsi que 0 à 10 parties en poids d'un composant polyol à bas poids moléculaire (A)(iii) avec deux groupes hydroxyle ou plus réagissant aux polyisocyanates et d'une masse moléculaire de 50 à 499 Dalton avec 2 à 30 parties en poids d'un composant polyisocyanate (B), constitué d'au moins un polyisocyanate, un dérivé de polyisocyanate ou d'homologues du polyisocyanate avec deux groupes isocyanate aliphatiques ou aromatiques ou plus, en ajoutant de 0 à 25 parties en poids d'un composant solvant (C) constitué d'un solvant organique inerte,
(a₂) on convertit, le cas échéant en présence d'un catalyseur, le pré-adduit de polyuréthane de l'étape (a₁) avec 0,1 à 10 parties en poids d'un composant polyol ou polyamine à bas poids moléculaire et pouvant être modifié par voir anionique (A)(iv) comportant deux groupes hydroxyle et/ou amino ou plus réagissant aux polyisocyanates et un ou plusieurs groupes acide carboxylique et/ou sulfonique inertes qui peuvent être transformés, partiellement ou entièrement, en groupes carboxylate respectivement sulfonate à l'aide de bases ou se présentent déjà sous forme de groupe carboxylate et/ou sulfonate, d'une masse moléculaire de 100 à 1000 Dalton et/ou avec 0 à 20 parties en poids d'un composant polyol polymère (A)(v) comportant deux groupes hydroxyle ou plus réagissant aux polyisocyanates et d'autres groupes hydrophiles inertes par rapport aux polyisocyanates, d'une masse moléculaire de 500 à 5000 Dalton,
(a₃) on convertit les groupes isocyanate libres du prépolymère de polyuréthane de l'étape (a₂), entièrement ou partiellement, avec 0 à 15 parties en poids d'un composant stoppeur de chaîne multifonctionnel (D) comportant trois groupes hydroxyle ou plus réagissant aux groupes isocyanate et/ou amino primaires et/ou secondaires et d'une masse moléculaire de 50 à 500 Dalton, dont un réagit avec le prépolymère de polyuréthane,
(a₄) on ajoute à l'oligomère ou polymère de polyuréthane multifonctionnel de l'étape (a₃) 0,1 à 10 parties en poids d'un composant de neutralisation (E) pour la neutralisation partielle ou complète des groupes acides et ensuite
(a₅) on disperse l'oligomère ou polymère de polyuréthane neutralisé de l'étape (a₄) dans 40 à 120 parties en poids d'eau qui peut encore contenir 0 à 50 parties en poids d'un composant de formulation (F),
(a₆) on convertit l'oligomère ou polymère de polyuréthane dont la chaîne n'a été stoppée que partiellement, de l'étape (a₅) encore avec 0 à 10 parties en poids d'un composant de prolongation de chaîne (G) avec deux groupes amino primaires et/ou secondaires ou plus réagissant à des groupes isocyanate et d'une masse moléculaire de 50 à 500 Dalton
ainsi que, le cas échéant,
(b) par la conversion subséquente du composant liant des étapes (a₄), (a₅) ou (a₆) avec 20 à 100 parties en poids d'un composant réticulant (H), le composant réticulant (H) mis en oeuvre étant des polyisocyanates dispersibles dans l'eau comportant des groupes isocyanate à liaison aliphatique et/ou cycloaliphatique et/ou aromatique, qui peuvent contenir 0 à 20 parties en poids d'un solvant organique.

2. Système polyuréthane selon la revendication 1, **caractérisé en ce que** le composant polyol à haut poids moléculaire (A)(ii) est constitué d'un polyol de polyéther et/ou de polyester et/ou de polycaprolactone et/ou de polycarbonate modifié de façon hydrophobe et/ou d'un a,w-polyméthacrylate-diol ou de combinaisons appropriées de ceux-ci.

3. Système polyuréthane selon l'une quelconque des revendications 1 ou 2, **caractérisé en ce qu'**on utilise, comme composant A(ii) des polyols de polyester et/ou de polycaprolactone et/ou de polycarbonate linéaires respectivement difonctionnels d'une masse moléculaire de 1000 à 3000 Dalton.

4. Système polyuréthane selon l'une quelconque des revendications 1 à 3, **caractérisé en ce qu'**on utilise, comme composant (A)(iii), du butane-1,4-diol et/ou du 2-méthyl-propane-1,3-diol et/ou du néopentyle glycol.

5. Système polyuréthane selon l'une quelconque des revendications 1 à 4, **caractérisé en ce que** le composant (A)(iv) est un acide bishydroxyalcane-carboxylique ou un acide bishydroxysulfonique respectivement ses sels alcalins d'une masse moléculaire de 100 à 1000 Dalton.

6. Système polyuréthane selon la revendication 5, **caractérisé en ce qu'**on utilise, comme acide bishydroxyalcane-carboxylique de l'acide 2-hydroxy-méthyl-2-méthyl-3-hydroxypropionique respectivement de l'acide diméthylolpropionique.

7. Système polyuréthane selon l'une quelconque des revendications 1 à 6, **caractérisé en ce qu'**on utilise, comme composant (A)(v) des produits de la conversion de monoalkyl éthers de poly(oxyde d'éthylène[-*co*/*bloc*/*ran*-oxyde de propylène]), d'un diisocyanate et de diéthanolamine.

8. Système polyuréthane selon l'une quelconque des revendications 1 à 7, **caractérisé en ce qu'**on utilise, comme composant stoppeur de chaîne multifonctionnel (D) des polyols aliphatiques ou cycloaliphatiques et/ou des polyamines et/ou des amino alcools.

9. Système polyuréthane selon la revendication 8, **caractérisé en ce qu'**on utilise, comme composant stoppeur de chaîne multifonctionnel (D) de la diéthanolamine, du triméthylol propane, de la pentaérythrite, des hydrates de carbone et/ou leurs dérivés.

10. Système polyuréthane selon l'une quelconque des revendications 1 à 9, **caractérisé en ce qu'**on utilise, comme composant de formulation (F), des agents anti-mousse, des agents d'aération, des additifs de glissement et d'écoulement, des additifs durcissant aux rayons, des additifs de dispersion, des additifs de mouillage du substrat, des agents d'hydrophobation, des additifs de rhéologie comme les épaississants au polyuréthane, des auxiliaires de coalescence, des agents de matage, des agents d'adhérence, des agents antigel, des antioxydants, des stabilisateurs d'UV, des bactéricides, des fongicides, d'autres polymères et/ou des dispersions polymères ainsi que des charges, des pigments, des agents de matage ou une combinaison appropriée de ces substances.

11. Système polyuréthane selon l'une quelconque des revendications 1 à 10, **caractérisé en ce que** le rapport NCO/équivalent OH des composants (A) et (B) a une valeur de 1,2 à 2,5, de préférence de 1,5 à 2,25.

12. Système polyuréthane selon l'une quelconque des revendications 1 à 11, **caractérisé en ce qu'**on utilise, comme composant réticulant (H), des polyisocyanates dispersibles dans l'eau comportant des groupes isocyanate liés par voie aliphatique et/ou cycloaliphatique et/ou aromatique, qui contiennent 0 à 20 parties en poids d'un solvant organique.

13. Système polyuréthane selon l'une quelconque des revendications 1 à 12, **caractérisé en ce qu'**on réalise les étapes de la réaction (a₁) et (a₂) en présence de 0,01 à 1 % en poids par rapport aux composants (A) et (B) d'un catalyseur usuel pour des réactions de polyaddition sur des polyisocyanates.

14. Système polyuréthane selon l'une quelconque des revendications 1 à 13, **caractérisé en ce qu'**on ajoute le composant de neutralisation (E) dans une quantité telle que le taux de neutralisation, par rapport aux groupes acide carboxylique et/ou acide sulfonique libres de l'oligomère ou polymère de polyuréthane constitués des composants (A), (B), (D), (E) et (G) est égal à 60 à 100 % en équivalent, de préférence à 80 à 95 % en équivalent.

15. Système polyuréthane selon l'une quelconque des revendications 1 à 14, **caractérisé en ce qu'**on ajoute le composant stoppeur de chaîne (D) dans une quantité telle que le taux de stoppage de chaîne par rapport aux groupes isocyanate libres du prépolymère de polyuréthane constitué des composants (A) et (B) est égal à 0 à 100 % en équivalent.

16. Système polyuréthane selon l'une quelconque des revendications 1 à 15, **caractérisé en ce qu'**on ajoute le composant prolongateur de chaîne (G) dans une quantité telle que le taux de prolongation de chaîne, par rapport aux groupes isocyanate libres de l'oligomère ou polymère de polyuréthane constitués des composants (A), (B), (D) et (E) est égal à 0 à 95 % en équivalent.

17. Système polyuréthane selon l'une quelconque des revendications 1 à 16, **caractérisé en ce qu'**on ajuste la teneur en corps solides de l'oligomère ou polymère de polyuréthane, constitué des composants (A), (B), (D), (E) et (G) à 35 à 60 % en poids, de préférence à 40 à 50 % en poids par rapport à la quantité totale du composant liant aqueux constitué des composants (A) à (E) et (G).

18. Système polyuréthane selon l'une quelconque des revendications 1 à 17, **caractérisé en ce que** la taille moyenne des particules des micelles du composant liant aqueux, constitué des composants (A) à (E) et (G) est de 10 à 300 nm.

19. Système polyuréthane selon l'une quelconque des revendications 1 à 18, **caractérisé en ce que** l'oligomère ou polymère de polyuréthane, constitué des composants (A), (B), (D), (E) et (G), a une masse moléculaire moyenne de 2000 à 100000 Dalton.

20. Système polyuréthane selon l'une quelconque des revendications 1 à 19, **caractérisé en ce que** le rapport entre le composant réticulant (H) et le composant liant, constitué des composants (A) à (E) ou (A) à (F) est de 1:3 à 1:5.

21. Procédé de production du système polyuréthane aqueux selon les revendications 1 à 20, **caractérisé en ce qu'**à l'étape de réaction
(a₁) on met en réaction les composants (A)(i), (A)(ii), (A)(iii), (B) et (C), le cas échéant en présence d'un catalyseur, en un pré-adduit de polyuréthane, les groupes hydroxyle des composants (A)(i), (A)(ii) et (A)(iii) étant partiellement ou entièrement convertis avec les groupes isocyanate du composant (B),
(a₂) on met en réaction le pré-adduit de polyuréthane de l'étape réactionnelle (a₁) avec les composants (A)(iv) et (A)(v),
(a₃) on met en relation, le cas échéant, le prépolymère de polyuréthane modifiable par voie anionique de l'étape réactionnelle (a₂) avec le composant (D), un seul groupe réactif du composant (D) réagissant avec un groupe isocyanate du pré-adduit de polyuréthane,
(a₄) on met en réaction l'oligomère ou polymère de polyuréthane, fonctionnalisé et modifiable par voie anionique, de l'étape réactionnelle (a₃), qui présente le cas échéant deux ou plusieurs groupes réactifs par extrémité de chaîne et une fonctionnalité totale de ≥ 4, avec le composant (E), en vue de la neutralisation partielle ou complète puis
(a₅) on disperse l'oligomère ou polymère de polyuréthane, fonctionnalisé et modifié par voie anionique, de l'étape réactionnelle (a₄) dans de l'eau qui contient encore le cas échéant le composant (F),
(a₆) on met en réaction avec le composant (G), le cas échéant, l'oligomère ou polymère de polyuréthane, dont la chaîne n'a été stoppée que partiellement, fonctionnalisé et modifié par voie anionique, de l'étape (a₅) et, le cas échéant,
(b) on met en réaction le composant liant de l'étape réactionnelle (a₅) ou de l'étape réactionnelle (a₆) avec le composant réticulant (H) éventuellement modifié par voie hydrophile, le composant réticulant (H) étant ajouté au composant liant et un système de revêtement anti-graffiti et anti-pollution hautement réticulé étant obtenu après l'application.

22. Procédé selon la revendication 21, **caractérisé en ce que** les étapes (a₄) et (a₅) sont regroupées de manière à ce que le composant (E) est ajouté à l'eau avant la dispersion.

23. Procédé selon l'une quelconque des revendications 21 à 22, **caractérisé en ce que** les étapes (a₅) et (a₆) sont regroupées de manière à ce que le composant (G) soit ajouté à l'eau avant la dispersion.

24. Procédé selon l'une quelconque des revendications 21 à 23, **caractérisé en ce qu'**on réalise les étapes réactionnelles (a₁) à (a₃) à une température de 60 à 120°C, de préférence de 80 à 100°C.

25. Procédé selon l'une quelconque des revendications 21 à 24, **caractérisé en ce qu'**on réalise l'étape réactionnelle (a₄) à une température de 40 à 65°C, de préférence à environ 50°C.

26. Procédé selon l'une quelconque des revendications 21 à 25, **caractérisé en ce qu'**on réalise les étapes réactionnelles (a₅) et (a₆) à une température de 30 à 50°C, de préférence à environ 40°C.

27. Procédé selon l'une quelconque des revendications 21 à 26, **caractérisé en ce qu'**on réalise l'étape réactionnelle (b) à une température de 20 à 40°C, de préférence à environ 20°C.

28. Utilisation du système polyuréthane à un ou deux composants, non formulé ou formulé, aqueux, modifié par un fluor selon les revendications 1 à 20 dans le bâtiment ou l'industrie en tant que systèmes de revêtement anti-graffiti et anti-pollution résistants à la lumière et aux produits chimiques pour les surfaces de matériaux de construction minéraux comme, par exemple, le béton, le ciment ainsi que le verre, le bois et les matériaux à base de bois, le papier, le métal et les matières plastiques.

29. Utilisation selon la revendication 28, **caractérisée en ce qu'**on utilise le système polyuréthane seul ou en combinaison avec la structure système de
(α) revêtements anti-graffiti anti-pollution en matière plastique, en bois ou en métal pour, par exemple, des panneaux indicateurs ou des wagons ferroviaires,
(β) revêtements anti-pollution de rotors pour installations éoliennes,
(γ) revêtements de sol anti-pollution pour l'intérieur et l'extérieur.
